# EUROPÄISCHE PATENTSCHRIFT

(11) **EP 2 842 718 B1**
(45) Veröffentlichungstag und Bekanntmachung des Hinweises auf die Patenterteilung: **04.01.2017**
(21) Anmeldenummer: 14180578.8
(22) Anmeldetag: 11.08.2014
(51) Int. Cl.: B29C 47/22, B29C 47/08, B29C 47/92, B29C 49/04

(54) **Extrusionswerkzeug zur Erzeugung schlauchförmiger Vorformlinge**
Extrusion die for generating tubular preforms
Filière d'extrusion destinée à la production de préformes en forme de tuyau

(30) Priorität: 30.08.2013 DE 102013109495
(43) Veröffentlichungstag der Anmeldung: 04.03.2015
(73) Patentinhaber: Feuerherm, Harald, 53840 Troisdorf (DE)
(72) Erfinder: Feuerherm, Harald, 53840 Troisdorf (DE); Kappen, Günter, 53840 Troisdorf (DE)
(74) Vertreter: Lorenz, Bernd Ingo Thaddeus

(56) Entgegenhaltungen:
- EP-A1- 0 945 245
- EP-A1- 1 004 423
- EP-A1- 1 060 067
- EP-A1- 1 066 948
- EP-A2- 1 837 156
- WO-A1-2012/167802
- US-A- 5 057 267
- US-A- 6 024 557

## Beschreibung

Die Erfindung betrifft ein Extrusionswerkzeug zur Erzeugung schlauchförmiger Vorformlinge mit einem Dorn, einem Düsenkörper, einem ringförmigen Düseneinsatz, der den Dorn unter Bildung eines Ringspaltes umgibt, und Stelleinrichtungen, die radial auf den Düseneinsatz wirken.

Der Dorn und der Düseneinsatz sind durch programmgesteuerte Stellbewegungen des Dorns und/oder des Düsenkörpers während der Extrusion der Vorformlinge relativ zueinander verstellbar. Dadurch erhalten die aus dem Extrusionswerkzeug austretenden Vorformlinge ein sich in axialer Richtung änderndes Wanddickenprofil. In Umfangsrichtung ist die Breite des Ringspaltes durch radiale Verstellung und/oder elastische Deformation des Düseneinsatzes änderbar. Die Stelleinrichtungen können manuell betätigbare Vorrichtungen sein oder Kraftantriebe aufweisen, die programmgesteuerte Stellbewegungen ausführen. Durch programmgesteuerte Stellbewegungen der Kraftantriebe ist die Schmelzeverteilung der aus dem Extrusionswerkzeug austretenden Vorformlinge während der Vorformlingsextrusion in Umfangsrichtung des Vorformlings veränderbar. Die Vorformlinge können kontinuierlich oder diskontinuierlich extrudiert werden. Die aus dem Extrusionswerkzeug austretenden Vorformlinge werden einer Blasformkavität einer Schließeinheit zugeführt, in der die Vorformlinge nach dem Schließen der Blasformkavität mittels Blasluft zu einem Kunststoffhohlkörper aufgeweitet werden. Die Vorformlinge können auch einen coextrudierten mehrschichtigen Aufbau aufweisen:

Die EP 1 066 948 A1 offenbart ein Extrusionswerkzeug mit den eingangs beschriebenen Merkmalen, dessen Düseneinsatz einen nach unten axial abgestützten Aufnahmering sowie einen in den Aufnahmering eingesetzten Düsenring aufweist. Der Düsenring ist mit einem Schiebesitz in dem Aufnahmering geführt und innerhalb des Aufnahmerings axial abgestützt. Der Aufnahmekörper ist mit dem Düsenkörper fest verbunden. Durch eine radiale Verlagerung des Düsenrings innerhalb des Aufnahmerings und durch eine radiale Verformung des Düsenrings kann die Ringspaltgeometrie des Extrusionswerkzeuges verändert werden. Zur Verstellung des Düsenrings sind zwei in einer Achse wirkende Stelleinrichtungen vorgesehen, die um 180° versetzt auf den Umfang des Düsenrings wirken. Eine Verstellung des Düsenrings in einer zweiten Achse ist mit dem bekannten Extrusionswerkzeug nicht möglich. Ähnliche Ausgestaltungen des Extrusionswerkzeuges mit einem fest mit dem Düsenkörper verbundenen Aufnahmering und einem in dem Aufnahmering angeordneten Düsenring, der elastisch verformbar ist und mittels eines Schiebesitzes in dem Aufnahmering geführt ist, sind aus EP 1 004 423 A1 und EP 1 837 156 A2 bekannt.

Ein Extrusionswerkzeug mit den eingangs beschriebenen Merkmalen ist aus DE 10 2005 026 726 A1 bekannt. Der Düseneinsatz des bekannten Extrusionswerkzeuges besteht aus einem formstabilen Ringkörper, der an seinem oberen Ende eine kugelkalottenförmige Außenfläche aufweist, die in einer komplementären Lagerschale schwenkbar gelagert ist. Durch eine Kippverstellung des Düseneinsatzes ist die Breite des Ringspaltes in Umfangsrichtung veränderbar. Eine variable Profilierung des Ringspaltes in Umfangsrichtung ist allerdings nicht möglich. Ferner ist die Kugellagerung des Ringkörpers aufwendig in der Fertigung und verschleißanfällig.

Aus DE 10 2009 058 361 B3 ist ein Extrusionswerkzeug bekannt, das ebenfalls die eingangs beschriebenen Merkmale aufweist. Der Düseneinsatz dieses Extrusionswerkzeuges weist ein formstabiles Endteil sowie einen elastisch verformbaren Mundbereich am Düsenaustritt auf. Der Schmelzekanal ist im Bereich der Trennung zwischen dem Düsenkörper und dem Düseneinsatz mittels einer elastisch verformbaren Dichtung abgedichtet. Der an der Dichtung anliegende Düseneinsatz ist in beliebiger Richtung kippbar gelagert. Die Dichtung ist im Schmelzekanal des Extrusionswerkzeuges hohen Temperaturen und Drücken ausgesetzt. Sie muss ausreichend nachgiebig sein, damit der stirnseitig an der Dichtung abgestützte Düseneinsatz die gewünschten Kippbewegungen ausführen kann. Im Falle einer Kippbewegung ist die Druckverteilung in der Dichtung ungleichmäßig und es ergeben sich je nach dem Kippwinkel des Düseneinsatzes Bereiche, in denen die Dichtung stark komprimiert wird, sowie Bereiche, in denen die Dichtung entlastet und die Dichtwirkung entsprechend herabgesetzt ist. Die Abdichtung des Düsenrings auf einer nachgiebigen, elastischen Dichtung ist daher problematisch. Hinzukommt die Gefahr, dass die Dichtung bei einer starken Verformung in den Schmelzekanal vorsteht und Inhomogenitäten im Schmelzefluss erzeugt. Bei der bekannten Ausführung ist der verformbare Mundbereich einstückig an das Endteil angeformt. Der aus einem formstabilen Endteil und einem dünnwandigen, verformbaren Mundbereich bestehende Düsenseinsatz ist ein konstruktiv sowie fertigungstechnisch aufwendiges und folglich auch teures Bauteil.

Aus DE 10 2012 022 409 B3 ist ein Extrusionswerkzeug bekannt, welches ein trifunktionelles Bauteil enthält. Das trifunktionelle Bauteil soll drei für die Verwendung des Extrusionswerkzeuges wichtige Funktionen übernehmen. Es soll eine Abdichtungsfunktion erfüllen und sowohl eine Kippbewegung des Düseneinsatzes als auch eine Längsverstellung des Düseneinsatzes innerhalb des Düsenkörpers ermöglichen. Der axiale Stellweg der Längsverstellung ist so bemessen, dass hierdurch die Wanddicke der aus dem Extrusionswerkzeug austretenden schlauchförmigen Vorformlinge verändert werden kann. Bei dem trifunktionellen Bauteil handelt es sich um ein temperaturbeständiges Elastomerbauteil, welches formschlüssig in eine Nut eingespannt wird. An den Werkstoff des Elastomerbauteils werden hohe Anforderungen gestellt. Ob das trifunktionelle Bauteil die Anforderungen in der Praxis erfüllen kann, ist fraglich.

Vor diesem Hintergrund liegt der Erfindung die Aufgabe zugrunde, ein Extrusionswerkzeug anzugeben, dessen Ringspalt in Umfangsrichtung variabel veränderbar ist, wobei alle mit der Kunststoffschmelze in Kontakt kommenden beweglichen Teile des Extrusionswerkzeuges gegenüber feststehenden Teile wirksam abgedichtet sein sollen und die Dichtwirkung unabhängig vom Kippwinkel des Düseneinsatzes ist. Das Extrusionswerkzeug soll ferner einen kompakten und einfachen konstruktiven Aufbau aufweisen.

Gegenstand der Erfindung und Lösung dieser Aufgabe ist ein Extrusionswerkzeug nach Anspruch 1.

Der Düseneinsatz weist erfindungsgemäß einen nach unten axial abgestützten Aufnahmering sowie einen in den Aufnahmering eingesetzten Düsenring auf. Der Aufnahmering ist mit einem Schiebesitz innerhalb des Düsenkörpers geführt und weist einen Funktionsabschnitt auf, der unterhalb des Schiebesitzes radial beweglich in einen Einbauraum des Düsenkörpers vorsteht. Der Düsenring ist mit einem Schiebesitz in dem Aufnahmering geführt und innerhalb oder außerhalb des Aufnahmerings axial abgestützt. Unterhalb des Schiebesitzes weist der Düsenring einen radial beweglichen Düsenringabschnitt auf. Eine erste Stelleinrichtung wirkt mit einer radialen Kraftwirkungsrichtung auf den Düsenring. Eine zweite Stelleinrichtung wirkt radial auf den Funktionsabschnitt des Aufnahmerings, welcher unterhalb des Schiebesitzes des Aufnahmerings radial beweglich in einem Einbauraum des Düsenkörpers vorsteht. Im Rahmen der Erfindung liegt es auch, dass die zweite Stelleinrichtung radial auf den Düsenring wirkt. Folglich besteht der ringförmige Düseneinsatz aus mindestens zwei ineinander gesteckten rohrförmigen Abschnitten, wobei der Verbindungsbereich als Schiebesitz ausgebildet ist. Ferner ist das mehrteilige Bauelement mittels eines Schiebesitzes innerhalb des Düsenkörpers gehalten. Dabei übernimmt die Überdeckung der einen Schiebesitz bildenden Anschlussbereiche auch die Dichtungsfunktion. Die Aufteilung des ringförmigen Düseneinsatzes in mehrere zueinander bewegliche Teile verschafft eine ausreichende Flexibilität, um den Ringspalt am Düsenaustritt in Umfangsrichtung zu verändern. Wenn die erste Stelleinrichtung radial auf den Düsenring wirkt und die zweite Stelleinrichtung dem Aufnahmering zugeordnet ist, erreicht man in funktioneller Hinsicht eine Entkopplung der Verstellachsen, was sich vorteilhaft auf die Verstellmöglichkeiten, Genauigkeit der Verstellung und die Dichtigkeit des Extrusionswerkzeuges auswirkt. Diese Ausgestaltung ist vor allem vorteilhaft bei großen Düsendurchmessern und/oder der Verwendung eines Düsenrings, der einen elastisch deformierbaren Düsenringabschnitt aufweist. Bei kleinem Düsendurchmesser und/oder einem formstabil ausgebildeten Düsenring kann die zweite Stelleinrichtung ebenso wie die erste Stelleinrichtung dem Düsenring zugeordnet werden. Eine Verstellung des Düsenrings wirkt sich dann mittelbar auf den radial beweglich angeordneten Funktionsabschnitt des Aufnahmerings aus und führt mittelbar zu dessen Verlagerung.

Zur Verbesserung der Dichtungsfunktion kann zwischen dem Düsenkörper und dem Aufnahmering einerseits oder zwischen dem Aufnahmering und dem Düsenring andererseits eine Dichtung vorgesehen werden, die im Bereich des Schiebesitzes angeordnet ist. Als Dichtungen eignen sich sowohl elastisch verformbare Dichtungen, als auch Hartstoffringe aus Gleitwerkstoffen, die als Gleitringdichtungen gebräuchlich sind. Unabhängig von der konkreten Ausgestaltung weist die Dichtung zumindest einen Dichtungsring aus einem temperaturbeständigen Material auf.

Die Kraftwirkungsrichtung der ersten Stelleinrichtung und die Kraftwirkungsrichtung der zweiten Stelleinrichtung können entsprechend der angestrebten Profilierung des Düsenspaltes beliebig zueinander ausgerichtet werden. Die Richtung der auf den Düsenring wirkenden Radialkraft und die Richtung einer auf den Aufnahmering wirkenden Radialkraft können beispielsweise fluchten oder mit einem axialen Versatz parallel zueinander ausgerichtet sein. Ferner können die auf den Düsenring wirkende Radialkraft der ersten Stelleinrichtung und die auf den Aufnahmering oder den Düsenring wirkende Radialkraft der zweiten Stelleinrichtung in Umfangsrichtung unter einem beliebig festlegbaren Winkel zueinander ausgerichtet sein.

Der Aufnahmering des Düseneinsatzes ist beispielsweise radial beweglich auf einem Träger abgestützt, der im Einbauraum des Düsenkörpers befestigt ist Der Träger kann insbesondere als Tragring ausgebildet sein oder eine Anordnung aus Segmenten aufweisen, an denen eine Abstützung nach Art einer Bajonettverbindung erfolgt. Die axiale Abstützung des Aufnahmerings kann am unteren Ende des Aufnahmerings erfolgen. Andere Ausgestaltungen des Trägers und Positionierungen des Trägers sollen nicht ausgeschlossen sein. Wesentlich ist, dass die axiale Abstützung des Aufnahmerings die radiale Beweglichkeit seines Funktionsabschnittes nicht einschränkt.

Der Aufnahmering kann sich auch bis zur Unterseite des Düseneinsatzes erstrecken. Als Träger zur Abstützung des Aufnahmerings kann beispielsweise ein Tragring verwendet werden. Auch andere Ausgestaltungen des Trägers sollen erfasst sein. Insbesondere kann der Träger eine Anordnung aus Segmenten aufweisen, an denen eine axiale Abstützung nach Art einer Bajonettverbindung möglich ist, wobei die Bajonettverbindung eine ausreichende radiale Beweglichkeit des Aufnahmerings unterhalb seines Schiebesitzes zulassen muss.

Unter die Erfindung sollen schließlich auch konstruktive Ausführungen fallen, bei denen der Düsenring im Düsenkörper oder an einem am Düsenkörper befestigten Träger abgestützt ist und der Aufnahmering axial am Düsenring abgestützt ist.

An seinem äußeren Umfang weist der Aufnahmering erfindungsgemäß eine als Sitzfläche bearbeitete zylindrische Umfangsfläche auf, die in eine Zylinderbohrung des Düsenkörpers oder in eine im Düsenkörper angeordnete Zwischenhülse eingreift. Dabei kann die Zwischenhülse mit einem Schiebesitz innerhalb des Düsenkörpers gehalten sein. Durch die vorzugsweise mit einer Spielpassung im Düsenkörper geführte Zwischenhülse kann die Flexibilität und Dichtungsfunktion weiter verbessert werden. Die zylindrische Umfangsfläche des Aufnahmerings und die zugeordnete zylindrische Fläche des Zwischenrings oder der Zylinderbohrung bilden zweckmäßig eine Spielpassung.

Der Aufnahmering weist vorzugsweise zwischen dem Schiebesitz und einem Kraftangriffspunkt der auf den Aufnahmering oder den Düsenring wirkenden zweiten Stelleinrichtung mindestens einen ringförmigen Abschnitt auf, der unter der Wirkung einer von der zweiten Stelleinrichtung erzeugten Radialkraft eine Krümmung des Aufnahmerings bewirkt. Das Material des Aufnahmerings und die Wandstärke des Aufnahmerings in diesem ringförmigen Abschnitt sind auf die Position des Kraftangriffspunktes sowie den möglichen Stellweg der Stelleinrichtung so abgestimmt, dass die Krümmung des Aufnahmerings sich nach einer Entlastung der auf sie wirkenden Radialkraft zumindest teilweise elastisch zurückstellt. Der Aufnahmering ist insbesondere als Metallhülse ausgebildet. Der Aufnahmering kann auch aus einem Verbundstoff bestehen, der im Bereich des Funktionsabschnittes einen anwendungsspezifischen Schichtaufbau aufweist, welcher sich von dem übrigen Aufbau des Rings unterscheidet. Ferner kann der Aufnahmering auch eine beispielsweise als Freidrehung gefertigte Schwächungszone aufweisen, welche eine Biegung des Aufnahmerings unter der Wirkung einer Radialkraft unterstützt. Eine etwaige Deformation des Aufnahmerings sowie das Spiel des Schiebesitzes sind maßgebend für die Kippverstellung des Düseneinsatzes in der durch die Kraftwirkungsrichtung der zweiten Stelleinrichtung vorgegebenen Achse.

Die zweite Stelleinrichtung weist zumindest einen Kraftantrieb auf, der radiale Druckkräfte auf den Aufnahmering oder den Düsenring überträgt oder mittels einer Verbindung, die radiale Zug- und Druckkräfte überträgt, an den Aufnahmering oder den Düsenring angeschlossen ist.

Der Düsenring des Düseneinsatzes weist an seinem oberen Ende eine von dem Aufnahmering umschlossene zylindrische Gleitsitzfläche auf. Die Gleitsitzfläche des Düsenrings und eine zugeordnete zylindrische Innenfläche des Aufnahmerings bilden dabei eine Spielpassung. Der Düsenring kann an seinem oberen Ende einen Kragen aufweisen, der beispielsweise auf einem Träger radial beweglich abgestützt ist, wobei der Träger insbesondere als Tragring ausgebildet sein kann. Gemäß einer bevorzugten Ausführung der Erfindung wird der Kragen des Düsenrings und der Aufnahmering mit demselben Tragring abgestützt.

Eine alternative Ausgestaltung sieht vor, dass der Düsenring unterhalb seines Schiebesitzes mittels einer lösbaren Formschlussverbindung, die radiale Relativbewegungen zulässt, an dem Aufnahmering befestigt ist. Diese Ausführung der Erfindung kommt insbesondere in Betracht, wenn der Aufnahmering sich bis zur Unterseite des Düseneinsatzes erstreckt. Die Formschlussverbindung zwischen Düsenring und Aufnahmering kann als Bajonett-Verbindung ausgebildet sein. Eine Vorteil dieser Ausgestaltung ist, dass der Düsenring ohne Ausbau des Aufnahmerings schnell gewechselt werden kann.

Der Kragen des Düsenrings und der den Kragen umgebende Abschnitt des Aufnahmerings bilden ein formstabiles Mittelstück des Düseneinsatzes. Vorzugsweise wirkt die zweite Stelleinrichtung, die eine Kippverstellung des Düseneinsatzes ermöglicht, auf das formstabile Mittelstück des Düseneinsatzes.

Eine vorteilhafte Ausgestaltung der erfindungsgemäßen Vorrichtung sieht vor, dass der Funktionsabschnitt des Aufnahmerings und der radial bewegliche Düsenringabschnitt des Düsenrings kinematisch gekoppelt sind. Die kinematische Kopplung bewirkt, dass eine am Aufnahmering aufgebrachte Verstellung auch eine definierte, überprüfbare und reproduzierbare Änderung der Position des Düsenrings zur Folge hat. Die kinematische Kopplung kann insbesondere mittels einer Kulissenführung erfolgen. Die Kulissenführung weist zweckmäßig mindestens ein in einen Führungsschlitz eingreifendes Mitnehmerelement auf, wobei das Mitnehmerelement quer zur Kraftwirkungsrichtung der auf den Aufnahmering wirkenden zweiten Stelleinrichtung ausgerichtet ist. Vorzugsweise ist der Führungsschlitz am Aufnahmering angeordnet und erstreckt sich vertikal nach unten, während das Mitnehmerelement mit einer radialen Ausrichtung mit dem Düsenring verbunden ist. Der Führungsschlitz kann beispielsweise an einem gabelförmigen Teil angeordnet oder in die Wandung des Aufnahmerings unmittelbar eingebracht sein. Die Kulissenführung bewirkt, dass die Verstellbewegung des Aufnahmerings zwangsläufig zu einer definierten Verstellung des Düsenrings in der Verstellrichtung des Aufnahmerings führt.

Die beschriebene kinematische Kopplung zwischen dem Funktionsabschnitt des Aufnahmerings und dem radial beweglichen Düsenringabschnitt des Düsenrings kann auch zweckmäßig sein, wenn die zweite Stelleinrichtung ebenso wie die erste Stelleinrichtung radial auf den Düsenring wirkt. In diesem Fall bewirkt die zweite Stelleinrichtung mittelbar über den Düsenring eine Verlagerung des Funktionsabschnitts des Aufnahmerings.

Die obere Stirnfläche des Aufnahmerings und des Düsenrings weist zweckmäßig jeweils eine an die Kanalgeometrie des Ringspaltes angepasste Abschrägung auf.

Vorzugsweise umfasst die erste Stelleinrichtung zumindest einen am Düsenkörper befestigten Kraftantrieb, der unter Zwischenschaltung eines Gelenks oder einer Kupplung, die Ausgleichsbewegungen in einer zweiten Achse kompensiert, an den Düsenring angeschlossen ist.

Der den Ringspalt am Düsenaustritt begrenzende Düsenringabschnitt des Düsenrings kann als elastisch deformierbare Hülse ausgebildet sein. Die erste Stelleinrichtung weist in diesem Fall zumindest einen auf die elastisch deformierbare Hülse wirkenden Kraftantrieb auf. Gemäß einer bevorzugten Ausführung des erfindungsgemäßen Extrusionswerkzeuges sind zur Verstellung der elastisch deformierbaren Hülse zwei Kraftantriebe vorgesehen. Die Kraftantriebe wirken unmittelbar oder unter Zwischenschaltung eines Übertragungselementes an Kraftangriffspunkten, die vorzugsweise um 180° versetzt zueinander am Umfang des Düsenrings angeordnet sind, radial auf die elastisch deformierbare Hülse und sind vorzugsweise derart mit der Hülse verbunden, dass radiale Druckkräfte und radiale Zugkräfte auf die Hülse übertragen werden können. Die beiden Kraftantriebe können an eine Programmsteuerung zur Steuerung Ihrer Stellbewegungen angeschlossen werden.

Wenn die beiden Kraftantriebe auf die elastisch deformierbare Hülse gegensinnige und gleichgroße Stellwege übertragen, wird die Hülse symmetrisch verformt. Der Querschnitt der Hülse nimmt dabei zumindest in der Ebene, in der die radialen Zug- oder Druckkräfte aufgebracht werden, einen ovalen Querschnitt oder zumindest eine an einer Ellipse angenäherte Grundform ein. Durch entsprechende Steuerung der beiden Kraftantriebe ist es auch möglich, dass die Hülse in radialer Richtung durch Betätigung der Kraftantriebe geschwenkt wird. Eine Schwenkbewegung in der Kraftwirkungsrichtung der Kraftantriebe und eine Deformation der elastisch deformierbaren Hülse können auch miteinander kombiniert werden, um die Geometrie des Düsenspaltes während der Extrusion der Vorformlinge stark zu verändern. Durch die Kombination radial angreifender Zug- und Druckkräfte, die beispielsweise um 180° versetzt am Umfang der Hülse angreifen, kann die Hülse in Kraftwirkungsrichtung verschwenkt werden. Wenn in Betrag und/oder Richtung unterschiedliche radiale Stellbewegungen der beiden Kraftantriebe ausgeführt werden, kann die Hülse sowohl verformt als auch gleichzeitig in der Bewegungsachse radial bewegt bzw. verschwenkt werden. In all diesen Fällen ist eine starke Profilierung der Düsenspaltgeometrie möglich. Hinzu kommt die Möglichkeit, die elastisch deformierbare Hülse auch durch eine Kippbewegung des Düseneinsatzes, die durch eine Verlagerung des Aufnahmerings bewirkt wird, quer zur Kraftwirkungsrichtung der auf den Düsenring wirkenden Kraftantriebe zu verstellen. Dadurch sind in zwei Achsrichtungen Einstellungen des Düsenrings relativ zum Dorn möglich.

Eine weitere Ausgestaltung des erfindungsgemäßen Extrusionswerkzeuges sieht vor, dass die elastisch deformierbare Hülse an mehreren an ihrem Umfang angeordneten Gegenlagern abgestützt ist und dass ein Kraftantrieb vorgesehen ist, der unmittelbar oder unter Zwischenschaltung eines Übertragungselementes auf eine außenliegende Mantelfläche der Hülse drückt. Der Kraftantrieb kann insbesondere an Übertragungselemente angeschlossen sein, die paarweise auf die elastisch deformierbare Hülse wirken. Die Übertragungselemente sind beispielweise kinematisch gekoppelt und führen bei einer Stellbewegung des Kraftantriebes eine gegenläufige Zangenbewegung aus. Diese Übertragungselemente können auch als Schieber ausgebildet sein, wobei die Schieber jeweils mit einer Gegenfläche am Umfang der Hülse zusammenwirken.

Im Rahmen der Erfindung liegt es auch, dass der den Ringspalt am Düsenaustritt begrenzende Düsenringabschnitt des Düsenrings formstabil ausgebildet ist. Die erste Stelleinrichtung weist dann zumindest einen auf den formstabilen Düsenringabschnitt wirkenden Kraftantrieb auf. Ebenso kann die zweite Stelleinrichtung auf den Düsenring wirken und zumindest einen radial auf den formstabilen Düsenringabschnitt wirkenden Kraftantrieb aufweisen. Der oder die Kraftantriebe können insbesondere unter Zwischenschaltung eines Gelenks oder einer Kupplung, die Ausgleichsbewegungen kompensiert, an den Düsenring angeschlossen sein.

Um das Maß der Verstellungen am Düsenaustritt erfassen zu können, ist zumindest dem Düsenring zweckmäßig eine Messeinrichtung zugeordnet, die Bewegungen des Düsenrings in den durch die Kraftwirkungsrichtung der ersten Stelleinrichtung und die Kraftwirkungsrichtung der zweiten Stelleinrichtung vorgegebenen Achsen erfasst. Die Messwerte der Messeinrichtung können für eine Lageregelung des Düseneinsatzes verwendet werden und werden zweckmäßig der Programmsteuerung zugeführt, welche die Bewegungen des Dornes und/oder des Düseneinsatzes während der Extrusion der Vorformlinge steuert. Dabei kann es vorteilhaft sein, wenn die Kippbewegung des Aufnahmerings und die radialen Bewegungen am Düsenring separat erfasst werden. Eine vorteilhafte Ausgestaltung der erfindungsgemäßen Vorrichtung sieht daher vor, dass dem Aufnahmering und dem Düsenring Messeinrichtungen zugeordnet sind, welche eine Kippbewegung des Aufnahmerings in der Kraftwirkungsrichtung der zweiten Stelleinrichtung und eine der Kippbewegung des Aufnahmerings überlagerte radiale Bewegung des Düsenrings in der Kraftwirkungsrichtung der ersten Stelleinrichtung erfassen.

Der Düsenring und der Aufnahmering bilden Kernelemente des erfindungsgemäßen Extrusionswerkzeuges. Bei allen zuvor beschriebenen Ausführungen begrenzt der Düsenring den Ringspalt am Düsenaustritt des Extrusionswerkzeuges. Im Rahmen der Erfindung liegt es aber auch, den Düsenring so zu gestalten, dass der Düseneinsatz durch Verwendung eines weiteren austauschbaren Düsenrings nach unten verlängert werden kann. Der austauschbare zusätzliche Düsenring ist dabei mit einem axialen Schiebesitz in dem Düsenring des Düseneinsatzes gehalten und weist unterhalb seines Schiebesitzes einen radial beweglichen Düsenringabschnitt auf, der den Ringspalt am Düsenaustritt begrenzt. Dem austauschbaren Düsenring kann eine weitere Stelleinrichtung zugeordnet werden, die in einem beliebigen Winkel zu der ersten Stelleinrichtung und der zweiten Stelleinrichtung des Düseneinsatzes wirkt.

Im Folgenden wird die Erfindung anhand einer lediglich ein Ausführungsbeispiel darstellenden Zeichnung erläutert. Es zeigen schematisch
- Fig. 1A, 1 B: Längsschnitte durch ein Extrusionswerkzeug zur Erzeugung schlauchförmiger Vorformlinge in zwei zueinander senkrechten Schnittebenen,
- Fig. 2A, 2B: eine weitere Ausgestaltung des Extrusionswerkzeuges ebenfalls als Längsschnitte in zwei zueinander senkrechten Schnittebenen,
- Fig. 3 bis 7: Querschnittsdarstellungen durch Anordnungen, die mehrere nebeneinander angeordnete Extrusionswerkzeuge aufwiesen, jeweils in der Schnittebene I-I aus den Fig. 1A, 1B,
- Fig. 8 und 9: Querschnittsdarstellungen durch ein Extrusionswerkzeug,
- Fig. 10A, 10B: Längsschnitte durch eine zweite Ausführung des Extrusionswerkzeuges in zwei zueinander senkrechten Schnittebenen,
- Fig. 11: einen Längsschnitt durch eine dritte Ausführung des Extrusionswerkzeuges, in der Schnittebene einer auf den Düsenring wirkenden ersten Stelleinrichtung,
- Fig. 12: einen Längsschnitt durch eine vierte Ausführung des Extrusionswerkzeuges in der Schnittebene einer auf den Aufnahmering wirkenden zweiten Stelleinrichtung,
- Fig. 13A: einen Längsschnitt durch eine fünfte Ausführung des Extrusionswerkzeuges,
- Fig. 13B: einen Horizontalschnitt durch den in Fig. 13A dargestellten Gegenstand,
- Fig. 14A, 14B: jeweils einen Halbschnitt in zwei zueinander senkrechten Schnittebenen durch eine sechste Ausführung der Erfindung,
- Fig. 15A, 15B: Längsschnitte in zwei zueinander senkrechten Schnittebenen durch eine Ausführungsvariante des in Fig. 10A/10B dargestellten Extrusionswerkzeuges.

Zum grundsätzlichen Aufbau des in verschiedenen Ausführungsvarianten dargestellten Extrusionswerkzeuges gehören ein Dorn 1, ein Düsenkörper 2, ein ringförmiger Düseneinsatz 3, der den Dorn 1 unter Bildung eines Ringspaltes umgibt, sowie zwei Stelleinrichtungen 4, 5. Eine erste Stelleinrichtung 4 ist zur Verstellung oder elastischen Deformation des Düseneinsatzes 3 in einer ersten Achse x vorgesehen. Eine zweite Stelleinrichtung 5 dient der Kippverstellung des Düseneinsatzes 3 in einer zweiten Achse y. In den Ausführungsbeispielen sind die beiden Achsen x, y unter einem rechten Winkel zueinander ausgerichtet. Die Stelleinrichtungen 4, 5 weisen Kraftantriebe auf, durch deren Betätigung der Ringspalt s in Umfangsrichtung profilierbar ist. Ferner ist der Dorn 1 in Axialrichtung verstellbar. Durch eine programmgesteuerte Stellbewegung des Dorns 1 ist die Breite des Ringspaltes s während der Vorformlingsextrusion veränderbar.

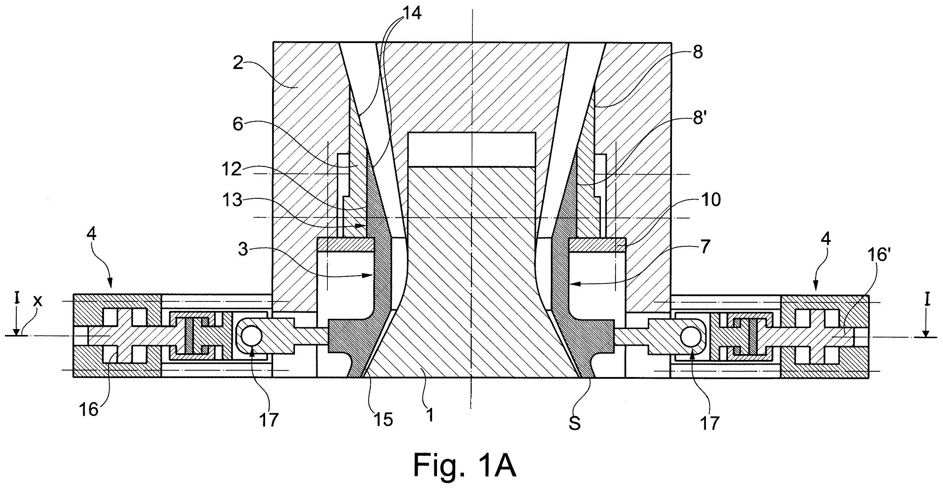

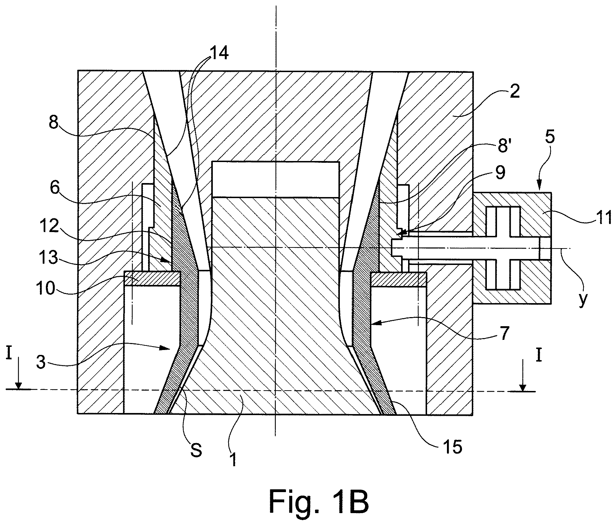

Aus den Fig. 1A und 1B geht hervor, dass der Düseneinsatz 3 einen nach unten axial abgestützten Aufnahmering 6 sowie einen in den Aufnahmering 6 eingesetzten Düsenring 7 aufweist. Der Aufnahmering 6 ist mit einem Schiebesitz 8 innerhalb des Düsenkörpers 2 geführt und weist einen Funktionsabschnitt 9 auf, der unterhalb des Schiebesitzes 8 radial beweglich in einen Einbauraum des Düsenkörpers 2 vorsteht. Der Düsenring 7 ist innerhalb oder außerhalb des Aufnahmerings 6 axial abgestützt und mit einem Schiebesitz 8' in dem Aufnahmering 6 geführt. Der Düsenring 7 weist unterhalb des Schiebesitzes 8' einen radial beweglichen Düsenringabschnitt auf. "Radial beweglich" meint, dass zwischen der Mantelfläche des Aufnahmerings 6 bzw. des Düsenrings 7 und der den Einbauraum begrenzenden Wandfläche des Düsenkörpers 2 ein Freiraum vorhanden ist, der radiale Bewegungen des Aufnahmerings 6 und des Düsenrings 7 jeweils unterhalb ihres Schiebesitzes 8, 8' zulässt. Aus einer vergleichenden Betrachtung der Fig. 1A und 1B geht hervor, dass die erste Stelleinrichtung 4 mit einer radialen Kraftwirkungsrichtung x auf den Düsenring 4 wirkt und dass die zweite Stelleinrichtung 5 in einer davon abweichenden Kraftwirkungsrichtung y radial auf den Funktionsabschnitt 9 des Aufnahmerings 6 wirkt.

Der Aufnahmering 6 ist radial beweglich auf einem als Tragring 10 ausgebildeten Träger abgestützt, der im Einbauraum des Düsenkörpers 2 befestigt ist. An seinem äußeren Umfang weist der Aufnahmering 6 eine als Sitzfläche bearbeitete zylindrische Umfangsfläche auf, die in eine Zylinderbohrung des Düsenkörpers 2 eingreift. Die zylindrische Umfangsfläche des Aufnahmerings und die zugeordnete Zylinderbohrung des Düsenkörpers 2 bilden eine Spielpassung.

Der Aufnahmering 6 ist als Metallhülse ausgebildet und kann zwischen dem Schiebesitz 8 und einem Kraftangriffspunkt der zweiten Stelleinrichtung 5 einen ringförmigen Abschnitt aufweisen, der unter der Wirkung einer von der zweiten Stelleinrichtung 5 erzeugten Radialkraft eine Krümmung des Aufnahmerings 6 bewirkt. Nach einer Entlastung der auf ihn wirkenden Radialkraft stellt sich die Krümmung des Aufnahmerings 6 zumindest teilweise elastisch zurück.

Die zweite Stelleinrichtung 5 weist gemäß der Darstellung in Fig. 1B zumindest einen Kraftantrieb 11 auf, der mittels einer Verbindung, die radiale Zug- und Druckkräfte auf den Aufnahmering 6 überträgt, auf den Aufnahmering 6 wirkt.

Der Düsenring 7 weist an seinem oberen Ende einen Kragen 12 auf, der an seinem äußeren Umfang eine von dem Aufnahmering 6 umschlossene zylindrische Gleitsitzfläche aufweist. Die Gleitsitzfläche des Düsenrings 7 und eine zugeordnete zylindrische Innenfläche des Aufnahmerings 6 bilden eine Spielpassung. Der Kragen 12 des Düsenrings 7 ist auf einem Träger radial beweglich abgestützt. Im Ausführungsbeispiel sind der Kragen 12 des Düsenrings 7 und der Aufnahmering 6 an demselben Träger abgestützt, der als Tragring 10 ausgebildet ist.

Aus den Fig. 1A und 1B geht auch hervor, dass der Kragen 12 des Düsenrings 7 und der den Kragen 12 umgebende Abschnitt des Aufnahmerings 6 ein formstabiles Mittelstück 13 des Düseneinsatzes 3 bilden und dass die zweite Stelleinrichtung 5 zur Kippverstellung des Düseneinsatzes 3 auf das formstabile Mittelstück 13 des Düseneinsatzes 3 wirkt.

Die obere Stirnfläche des Aufnahmerings 6 und des Düsenrings 7 weisen jeweils eine an die Kanalgeometrie des Ringspaltes angepasste Abschrägung 14 auf.

In dem in den Figuren 1A, 1B dargestellten Ausführungsbeispiel ist der den Ringspalt am Düsenaustritt begrenzende Düsenringabschnitt des Düsenrings 7 als elastisch deformierbare Hülse 15 ausgebildet. Die erste Stelleinrichtung 4 weist zwei Kraftantriebe 16, 16' auf, die unmittelbar oder unter Zwischenschaltung eines Übertragungselementes an Kraftangriffspunkten, die unter einem Winkel von beispielsweise 180° versetzt zueinander am Umfang des Düsenrings 7 angeordnet sind, radial auf die elastisch deformierbare Hülse 15 wirken. In den Ausführungsbeispielen sind die Kraftantriebe 16, 16' der ersten Stelleinrichtung 4 jeweils unter Zwischenschaltung eines Gelenks oder einer Kupplung 17, die Ausgleichsbewegungen in der zweiten Achse y kompensiert, mit dem Düsenring 7 verbunden.

Die Verbindung zwischen den Kraftantrieben 16, 16' und der elastisch deformierbaren Hülse 15 ist so gestaltet, dass radiale Druckkräfte und radiale Zugkräfte auf die Hülse 15 übertragen werden können. Die Kraftantriebe 16, 16' sind an eine Programmsteuerung angeschlossen.

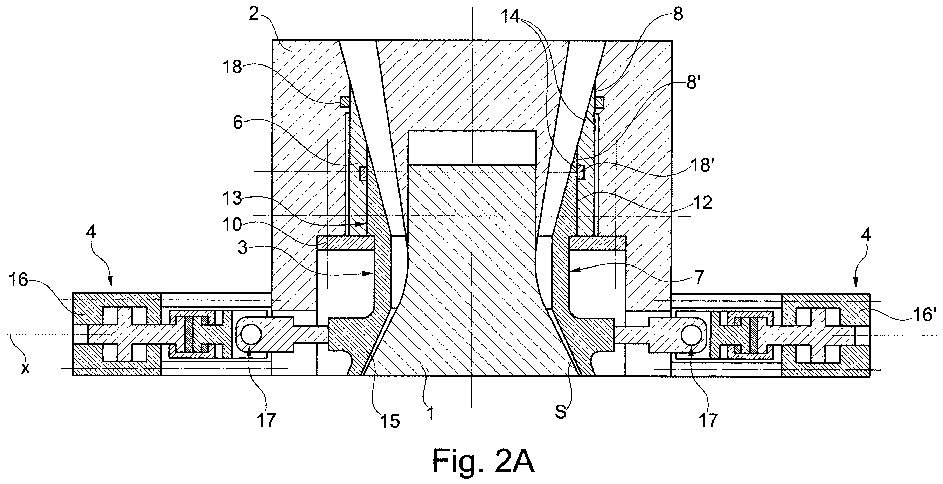

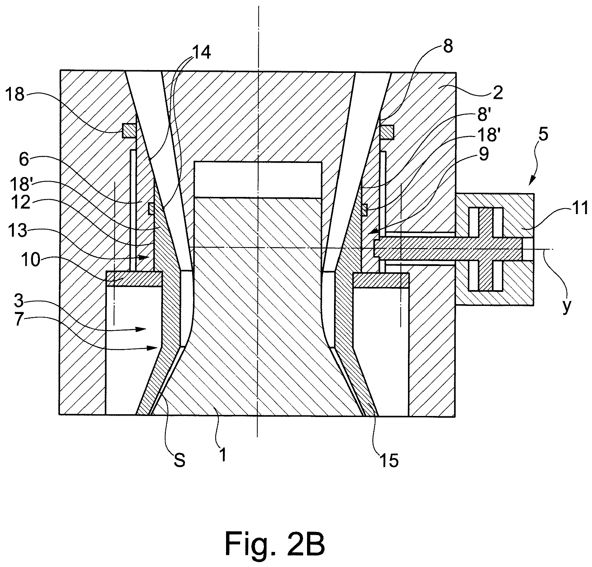

Das in den Fig. 2A, 2B dargestellte Extrusionswerkzeug hat den vorbeschriebenen Aufbau. Zusätzlich sind Dichtungen 18, 18' zwischen den relativ zueinander beweglichen Bauteilen vorgesehen. Zwischen dem Düsenkörper 2 und dem Aufnahmering 6 ist eine Dichtung 18 vorgesehen, die im Bereich des Schiebesitzes 8 angeordnet ist. Auch zwischen dem Aufnahmering 6 und dem Düsenring 7 ist eine Dichtung 18' vorgesehen, die ebenfalls im Bereich des Schiebesitzes 8' angeordnet ist. Als Dichtungen 18, 18' können Dichtungsringe aus einem temperaturbeständigen Material eingesetzt werden. Geeignet sind beispielsweise metallgefasste Weichstoffringe, Metallwellringe mit Weichstoffauflagen, kammprofilierte Dichtungen und Elastomerdichtungen aus temperaturbeständigen Polymeren. Auch Metallpackungen und Kohlepackungen kommen als Dichtungen 18, 18' in Betracht. Als Dichtungen kommen insbesondere auch rohrförmige Dichtungselemente in Betracht, die den Aufnahmering 6 und/oder den Düsenring 7 im Bereich der Spielpassung seitlich abstützen und dadurch auch verschleißmindernd wirken können.

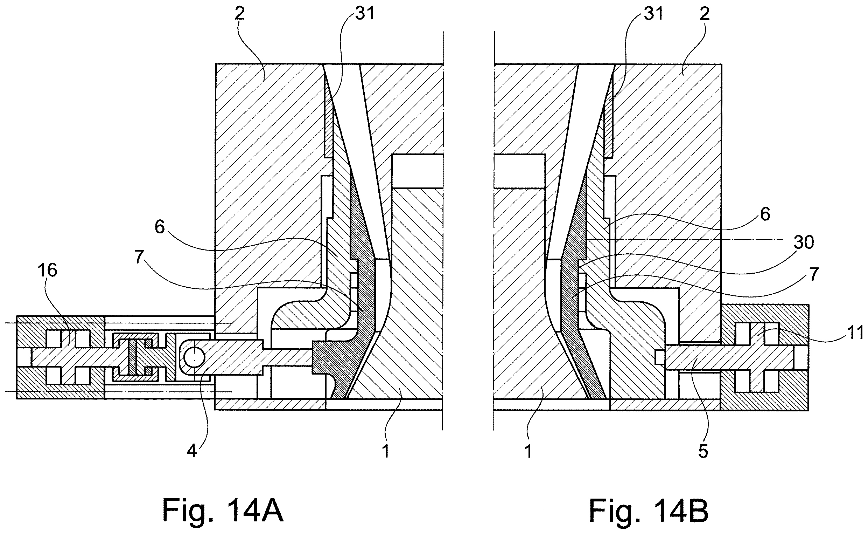

Das in den Fig. 14A und 14B jeweils im Halbschnitt dargestellte Extrusionswerkzeug hat den anhand der Fig. 1A und 1B erläuterten Aufbau. Im Ausführungsbeispiel der Fig. 14A/14B weist der Aufnahmering 6 an seinem äußeren Umfang eine als Sitzfläche bearbeitete zylindrische Umfangsfläche auf, die in eine im Düsenkörper 2 angeordnete Zwischenhülse 31 eingreift. Die Zwischenhülse 31 ist axial im Düsenkörper abgestützt und mit einem Schiebesitz innerhalb des Düsenkörpers 2 geführt. Zwischen der Umfangsfläche der Zwischenhülse 31 und einer Zylinderbohrung des Düsenkörpers 2 ist zweckmäßig eine Spielpassung vorgesehen. Durch die Zwischenhülse 31 kann die Flexibilität und Dichtungsfunktion weiter verbessert werden.

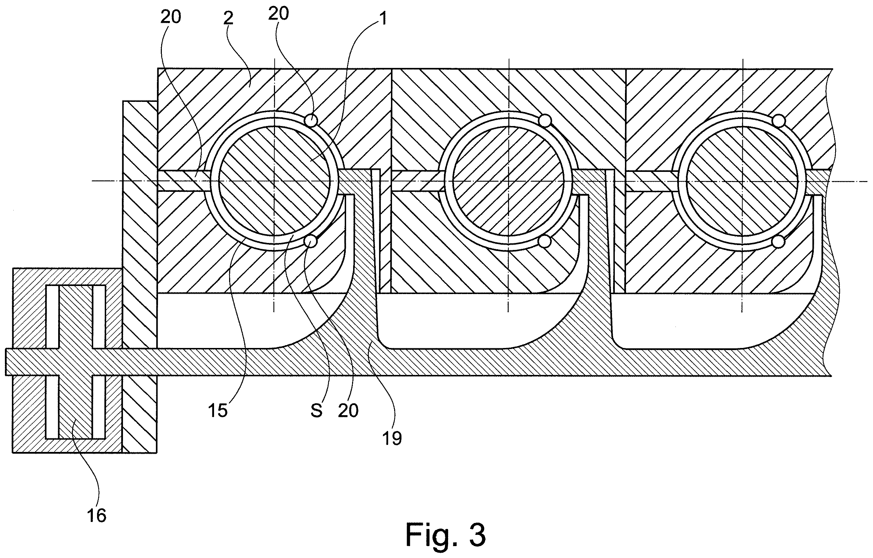

In den Ausführungsbeispielen der Fig. 3 bis 7 ist zur Verstellung und/oder Deformierung der elastisch deformierbaren Hülse 15 zumindest ein Kraftantrieb 16 vorgesehen, der unter Zwischenschaltung eines Übertragungselementes 19, 19' auf eine außenliegende Mantelfläche der Hülse 15 wirkt. Die Hülse besteht im Regelfall aus Metall und ist dünnwandig. Andere Hülsenwerkstoffe, z. B. temperaturbeständige Kunststoffe und Verbundmaterialien, können ebenfalls eingesetzt werden. Bevorzugt ist eine Ausgestaltung der Hülse 15, die sowohl durch radiale Druckkräfte als auch durch radiale Zugkräfte verformt werden kann. Während der Extrusion der Vorformlinge wird die Querschnittsgeometrie der Hülse 15 verändert, um das Profil des Ringspaltes s zu beeinflussen.

Im Ausführungsbeispiel der Fig. 3 wirken die Übertragungselemente 19 bei einer Stellbewegung jeweils an einer Seite auf eine außenliegende Mantelfläche der Hülse 15, die an mehreren an ihrem Umfang angeordneten Gegenlagern 20 abgestützt ist. Die Anzahl und Position der Gegenlager 20 beeinflusst den Querschnitt der Hülse 15, der sich bei der Betätigung der einseitig wirkenden Übertragungselemente 19 durch elastische Verformung einstellt. Im Ausführungsbeispiel sind drei Gegenlager 20 vorgesehen, die in äquidistanten Abständen am Umfang der Hülse 15 angeordnet sind, wobei eines der Gegenlager 20 um 180° zum Kraftangriffspunkt des Übertragungselementes 19 versetzt positioniert ist.

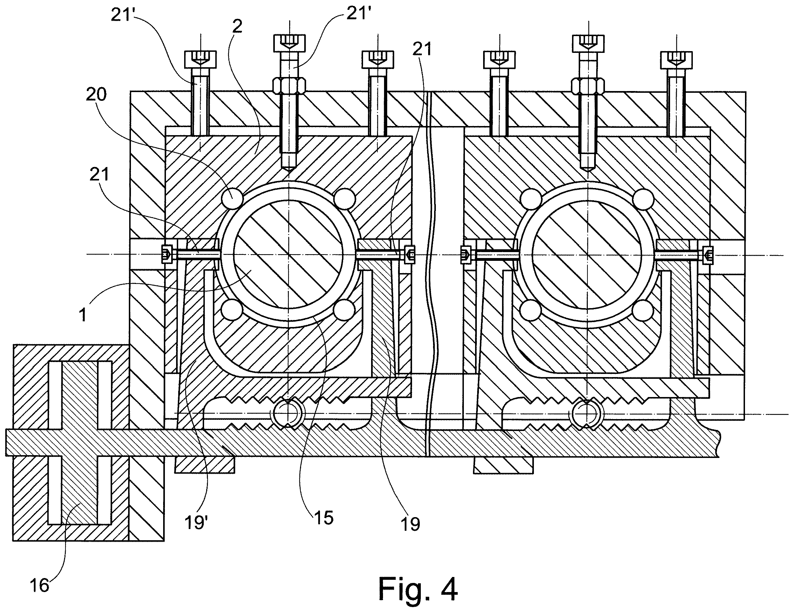

Im Ausführungsbeispiel der Fig. 4 wirken die Übertragungselemente 19, 19' paarweise auf die Hülse 15 und sind kinematisch gekoppelt. Die jeweils einer Hülse 15 zugeordneten Übertragungselemente 19, 19' führen bei einer Stellbewegung des Kraftantriebs 16 eine gegenläufige Zangenbewegung aus. Der Kraftantrieb 16 weist einen pneumatischen, hydraulischen oder elektromechanischen Antriebskopf zur Erzeugung einer Linearbewegung eines Schubelementes auf. Das Schubelement wirkt mit einem linearbeweglichen Stellelement zusammen, welches eine von der Linearbewegung des Schubelementes abgeleitete reversierende Stellbewegung ausführt. Zusätzlich kann die Hülse 15 entsprechend der Darstellung in Fig. 4 an Gegenlagern 20 abgestützt sein. Vorzugsweise sind vier Gegenlager 20 vorgesehen, die unter einem Winkel von +/- 45° zur Deformationsachse ausgerichtet sind. Die Deformationsachse ist durch die Kraftangriffspunkte der Übertragungselemente 19, 19' festgelegt.

An den Extrusionswerkzeugen der jeweils mehrere Extrusionswerkzeuge umfassenden Anordnungen können unabhängige Grundeinstellungen vorgenommen werden, wobei im Zuge dieser Einstellungen die Hülsen 15 der Extrusionswerkzeuge vordeformiert werden und/oder die Position der Hülsen 15 korrigiert wird und/oder der Düseneinsatz 3 und der Dorn 1 der Extrusionswerkzeuge relativ zueinander verstellt werden. Zur Veränderung der Grundeinstellung der Extrusionswerkzeuge sind individuell zugeordnete und unabhängig voneinander betätigbare Stellelemente 21, 21' vorgesehen. Gemäß dem Ausführungsbeispiel der Fig. 4 sind an den Übertragungselementen 19, 19' Stellelemente 21 angeordnet, die radial auf die Wandfläche der zugeordneten Hülsen 15 wirken. Durch Betätigung dieser Stellelemente 21 kann jeweils die dem Stellelement 21 zugeordnete Hülse 15 deformiert und hinsichtlich ihrer Lage korrigiert werden. Des Weiteren sind Stellelemente 21' vorgesehen, die auf den Düseneinsatz 3 der Extrusionswerkzeuge wirken und eine Positionskorrektor des Düseneinsatzes 3 relativ zum Dorn 1 des Extrusionswerkzeuges ermöglichen. Die Veränderung einer Grundeinstellung an den Extrusionswerkzeugen ist vorteilhaft, da bei der Herstellung von kleinen blasgeformten Hohlkörpern ein kleiner Unterschied im radialen Düsenspaltbereich von einem Extrusionswerkzeug zum anderen Extrusionswerkzeug große Wanddickenunterschiede der Vorformlinge zur Folge haben. Daher ist es wichtig, dass zum Ausgleich von Fertigungstoleranzen jedes auf die Hülse 15 wirkende Übertragungselement 19, 19' Stellelemente 21 aufweist. Ferner können das rheologische Verhalten der Kunststoffschmelze sowie Fertigungstoleranzen in den Fließkanälen der Extrusionswerkzeuge und Temperaturunterschiede dazu führen, dass der Schlauchlauf der aus den Extrusionswerkzeugen austretenden Vorformlingen sowie die radiale Wanddickenverteilung der einzelnen, aus den verschiedenen Extrusionswerkzeugen austretenden Vorformlinge voneinander abweichen. Zur Korrektur dieser Effekte kann es zweckmäßig sein, wenn an jeder Hülse 15 durch die verschiedenen Stellelemente 21 die Grundform der Hülse 15 und deren Position korrigiert werden kann. Entsprechendes gilt für eine Korrektur der Lage zwischen Düseneinsatz 3 und Dorn 1 unter Verwendung der Stellelemente 21'.

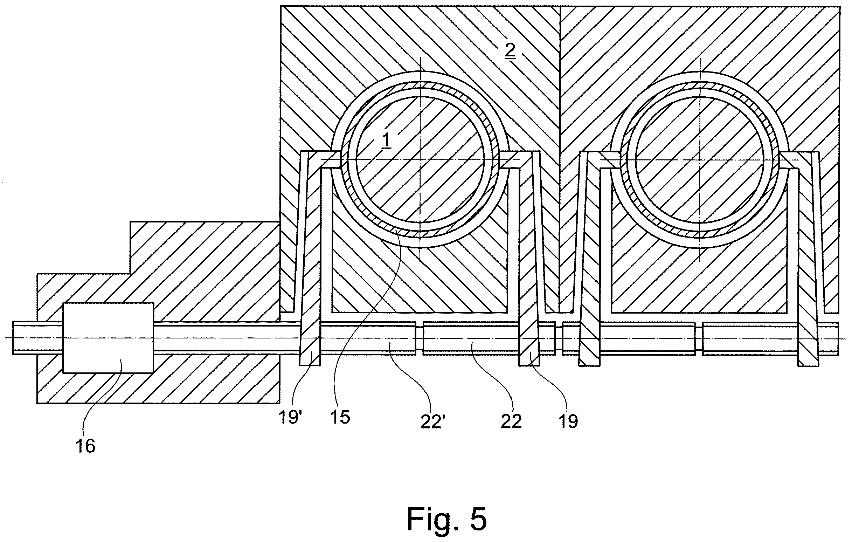

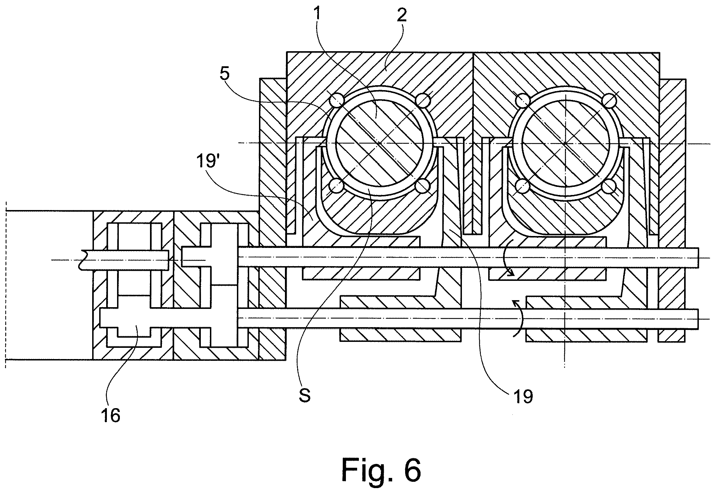

Auch in den Ausführungsbeispielen der Fig. 5 und 6 wirken die Übertragungselemente 19, 19' paarweise auf die Hülsen 15 und üben bei einer Stellbewegung beidseits Druck auf die zugeordnete Hülse 15 aus. Die Übertragungselemente 19, 19' eines jeden Paares sind kinematisch gekoppelt und führen bei einer Stellbewegung des Antriebes eine gegenläufige Zangenbewegung aus. Gemäß der Darstellung in Fig. 5 ist der Kraftantrieb 16 als Spindelantrieb ausgebildet und weist eine drehbar gelagerte Abtriebsspindel mit rechtsgängigen und linksgängigen Gewindeabschnitten 22, 22' auf, wobei jeweils ein Übertragungselement 19 der den Hülsen 15 zugeordneten Übertragungselement-Paare an einen rechtsgängigen Gewindeabschnitt 22 und das andere Übertragungselement des Paares an den linksgängigen Gewindeabschnitt 22' angeschlossen ist.

Im Ausführungsbeispiel der Fig. 6 weist der ebenfalls als Spindelantrieb ausgebildete Kraftantrieb 16 zwei kinematisch gekoppelte gegensinnig rotierende Abtriebsspindeln auf, wobei jeweils ein Übertragungselement 19 der paarweise den Hülsen zugeordneten Übertragungselemente an eine erste Abtriebsspindel und das andere Übertragungselement des Paares an die zweite Abtriebsspindel angeschlossen ist.

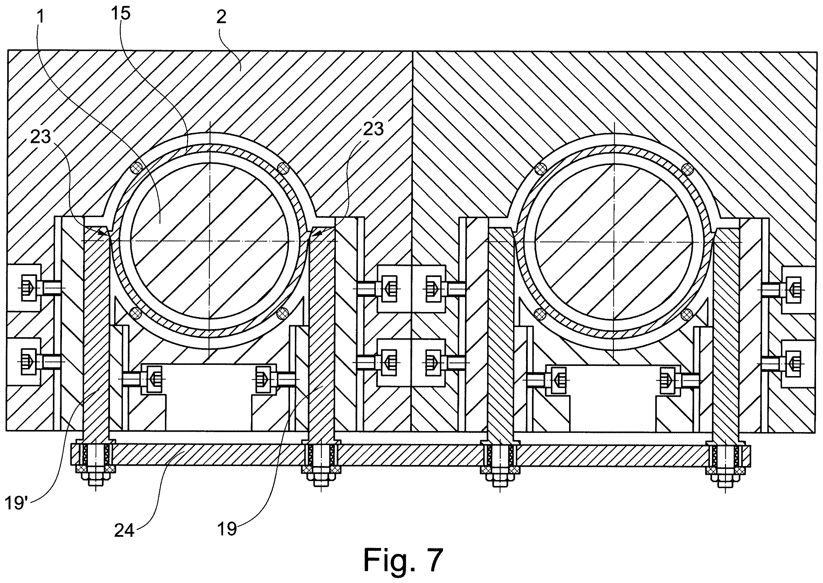

Die Übertragungselemente 19, 19' können auch als Schieber ausgebildet sein, wobei die Schieber jeweils eine Steuerfläche 23 aufweisen, die mit einer Gegenfläche an der zugeordneten Hülse 15 zusammenwirkt. Eine solche konstruktive Lösung ist in Fig. 7 dargestellt. Die Steuerflächen 23 bestehen aus einem angefasten Ende der Schieber. Die Schieber üben bei einer Stellbewegung beidseits Druck auf die zugeordnete Hülse 15 aus und verformen diese elliptisch. Die rückseitig an eine gemeinsame Traverse 24 angeschlossenen Schieber sind zwischen Druckplatten geführt, deren Position durch Stellmittel einstellbar ist. Durch Einstellen der Druckplatten können an den Extrusionswerkzeugen individuelle Grundeinstellungen vorgenommen werden. Im Rahmen dieser Grundeinstellungen können die Positionen der Hülsen 15 individuell korrigiert werden. Ferner sind individuelle Vordeformationen der Hülse 15 möglich.

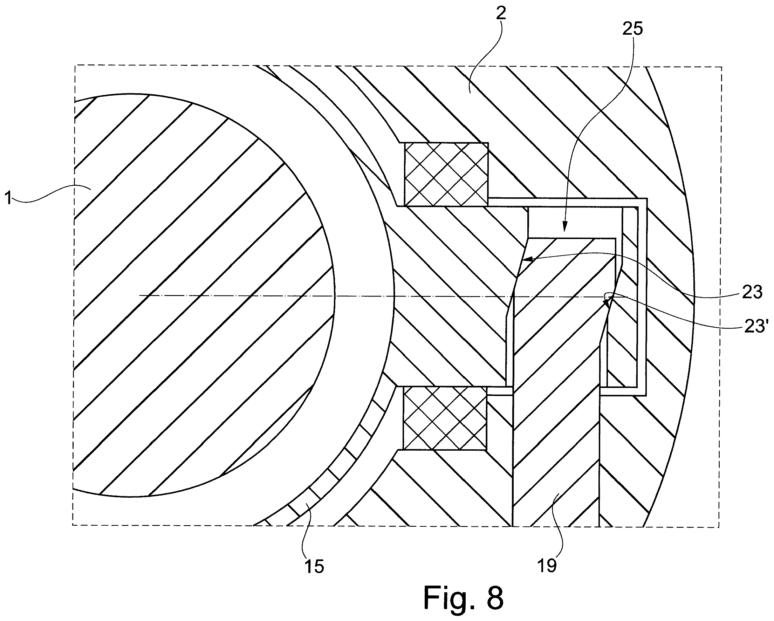

Der Anschlussbereich 25 zwischen dem als Schieber ausgebildeten Übertragungselement 19 und einer Hülse 15 kann so gestaltet werden, dass bei einer Stellbewegung der Übertragungselemente 19 Zugkräfte auf Flächen der Hülse 15 übertragen werden und die Hülsen 15 durch beidseitig angreifende Zugkräfte elliptisch verformt werden. In diesem Fall wirken die Schieber auf Steuerflächen, die mit den Hülsen 15 verbunden sind. Der Anschlussbereich 25 zwischen den Übertragungselementen 19 und den Hülsen 15 kann ferner auch so ausgebildet werden, dass bei einer Stellbewegung der Übertragungselemente 19 in Abhängigkeit des Stellweges eine Zugkraft oder eine Druckkraft auf die Hülsen übertragen wird. Ein entsprechendes Anschlusselement ist in Fig. 8 dargestellt. Das Übertragungselement 19 greift in das Anschlusselement ein, das mit dem Mantel der Hülse 15 verbunden ist und Steuerflächen 23 zur Übertragung radialer Druckkräfte und Steuerflächen 23' zur Übertragung radialer Zugkräfte aufweist.

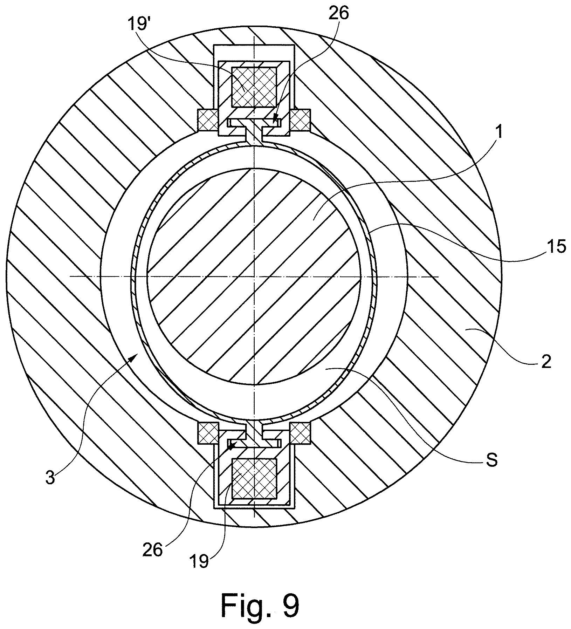

In der Schnittdarstellung der Fig. 9 ist beispielhaft eine Düsenspaltgeometrie dargestellt, die sich zwischen Dorn 1 und Düseneinsatz 3 einstellen lässt. Die Übertragungselemente 19, 19' greifen in Anschlusselemente ein, die durch Formschlusselemente 26 lösbar mit der Hülse 15 verbunden sind. Die elastisch deformierbare Hülse 15 ist austauschbar, ohne dass die Anschlusselemente und die zugeordneten Übertragungselemente 19 ausgebaut werden müssen.

Im Hinblick auf die in den Fig. 3 bis 9 dargestellten Ausführungsbeispiele bleibt noch anzumerken, dass die zweite Stelleinrichtung 5 ebenfalls eine Mehrzahl von Übertragungselementen aufweisen kann, die eine Stellbewegung eines Kraftantriebes auf den Funktionsabschnitt 9 des Aufnahmerings 6 mehrerer nebeneinander angeordneter Extrusionswerkzeuge synchron übertragen.

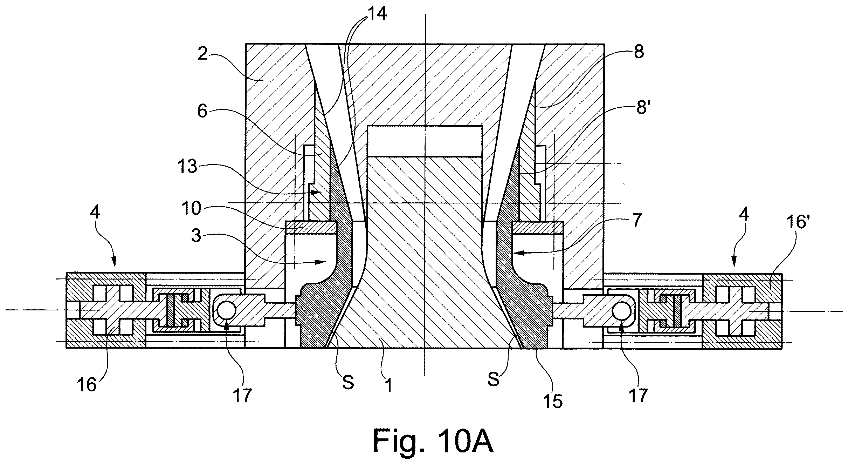

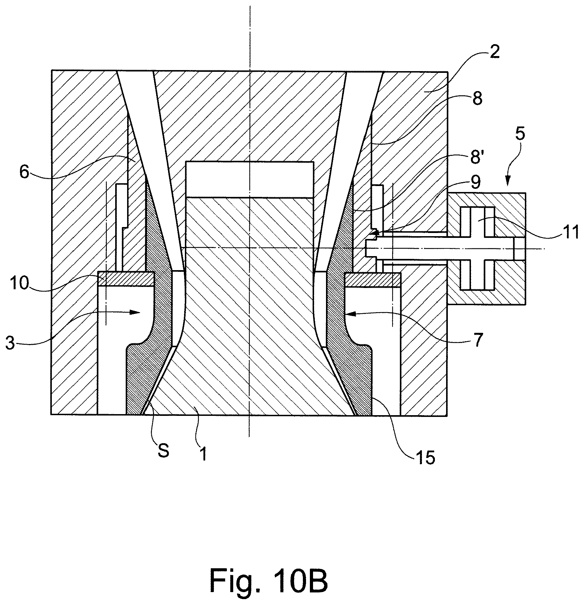

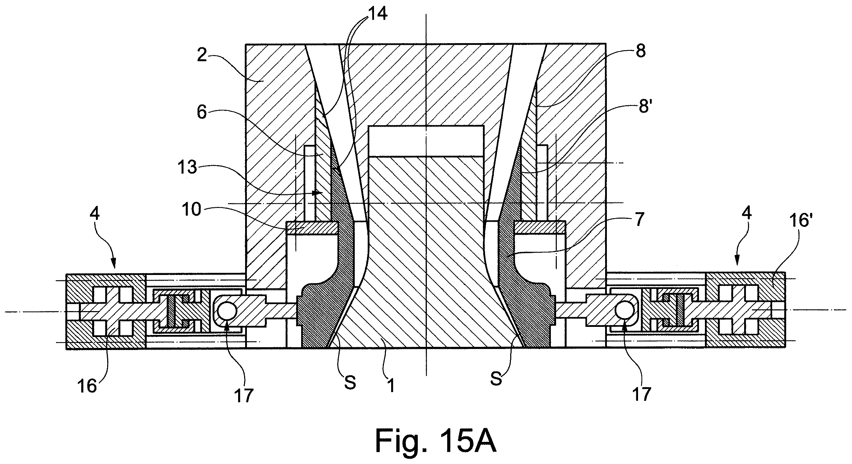

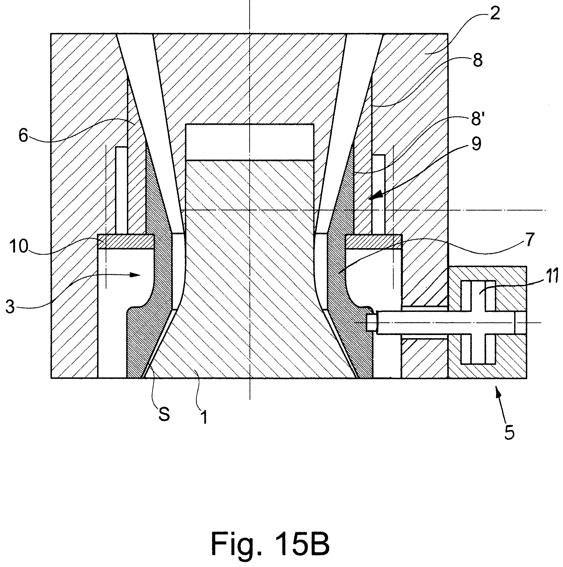

Gemäß der in Fig. 10A/10B und Fig. 15A/15B dargestellten Ausgestaltungen des erfindungsgemäßen Extrusionswerkzeuges ist der den Ringspalt s am Düsenaustritt begrenzende Düsenringabschnitt des Düsenrings 7 formstabil ausgebildet. Die erste Stelleinrichtung 4 weist zumindest einen auf den formstabilen Düsenringabschnitt wirkenden Kraftantrieb 16 auf, wobei in den Ausführungsbeispielen jeweils zwei Kraftantriebe 16, 16' vorgesehen sind. Durch Betätigung sowohl der Kraftantriebe 16, 16' der ersten Stelleinrichtung 4 als auch des Kraftantriebes 11 der zweiten Stelleinrichtung 5 kann der formstabile Düsenringabschnitt in zwei Achsrichtungen x, y relativ zum Dorn 1 verlagert werden, um die Düsenspaltgeometrie zu beeinflussen. Im Ausführungsbeispiel der Fig. 10A/10B wirkt der Kraftantrieb 11 der zweiten Stelleinrichtung 5 wie bei allen zuvor beschriebenen Ausführungen radial auf den Funktionsabschnitt 9 des Aufnahmerings 6, welcher unterhalb des Schiebesitzes 8 des Aufnahmerings radial beweglich in einen Einbauraum des Düsenkörpers 2 vorsteht. Gemäß der Darstellung in Fig. 15A/15B ist der Kraftantrieb 11 der zweiten Stelleinrichtung 5 dem Düsenring 7 zugeordnet und wirkt ebenso wie die Kraftantriebe 16, 16' der ersten Stelleinrichtung radial auf den Düsenring 7.

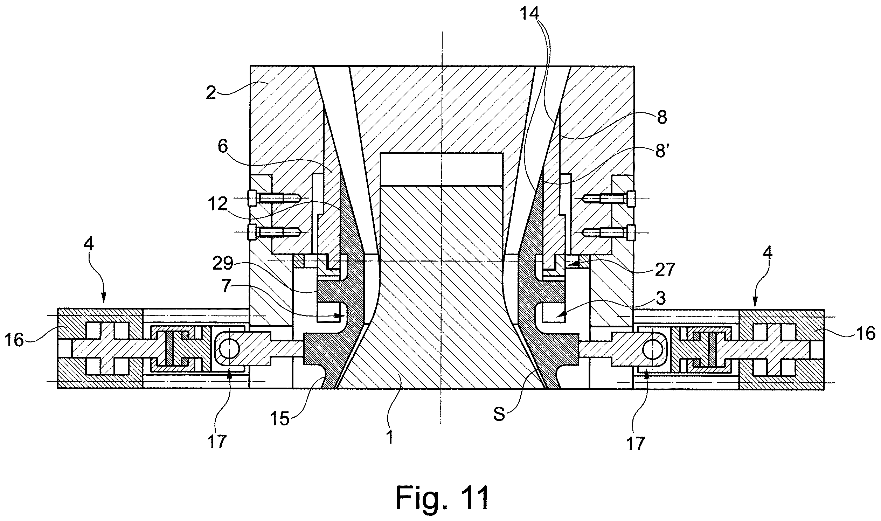

In den in Fig. 11, 12, 13A/13B dargestellten Ausführungsbeispielen ist die zweite Stelleinrichtung 5 dem Aufnahmering 6 zugeordnet und wirkt radial auf den Funktionsabschnitt 9 des Aufnahmerings 6. Gemäß der Darstellung in Fig. 11 sind der Funktionsabschnitt 9 des Aufnahmerings 6 und der radial bewegliche Düsenringabschnitt des Düsenrings 7 kinematisch gekoppelt. Die kinematische Kopplung erfolgt mittels einer Kulissenführung 27. Diese weist im Ausführungsbeispiel mindestens ein in einen Führungsschlitz eingreifendes Mitnehmerelement 29 auf, wobei das Mitnehmerelement 29 quer zur Kraftwirkungsrichtung der auf den Aufnahmering 6 wirkenden zweiten Stelleinrichtung 5 ausgerichtet ist und beispielsweise als Zapfen ausgebildet sein kann. Der Führungsschlitz ist am Aufnahmering 6 angeordnet und erstreckt sich vertikal nach unten. Der Führungsschlitz kann in die Wandung des Aufnahmerings 6 eingearbeitet sein. Im Ausführungsbeispiel ist er als gabelförmiges Führungsstück ausgebildet, das an dem Aufnahmering 6 befestigt ist. Das Mitnehmerelement 29 ist mit dem Düsenring 7 verbunden und ist radial ausgerichtet. Die kinematisch Kopplung zwischen dem Düsenring 7 und dem Aufnahmering 6 bewirkt, dass eine am Aufnahmering 6 bewirkte Kippverstellung auch eine definierte, überprüfbare und reproduzierbare Änderung der Position des Düsenrings 7 zur Folge hat. Zweckmäßig ist dem Düsenring eine (nicht dargestellte) Messeinrichtung zugeordnet, die Bewegungen des Düsenrings 7 in den durch die Kraftwirkungsrichtung der ersten Stelleinrichtung 4 und die Kraftwirkungseinrichtung der zweiten Stelleinrichtung 5 vorgegebenen Achsen erfasst. Die Messwerte der Messeinrichtung können dann für eine Lageregelung des Düseneinsatzes 3 verwendet werden.

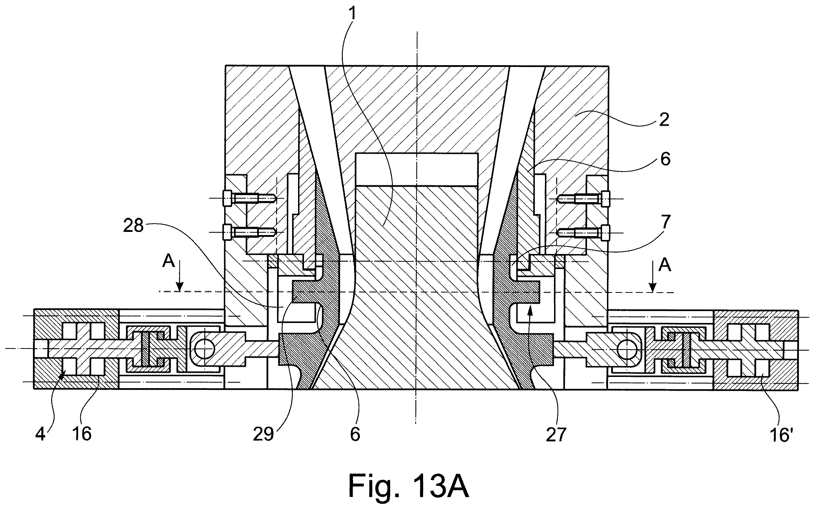

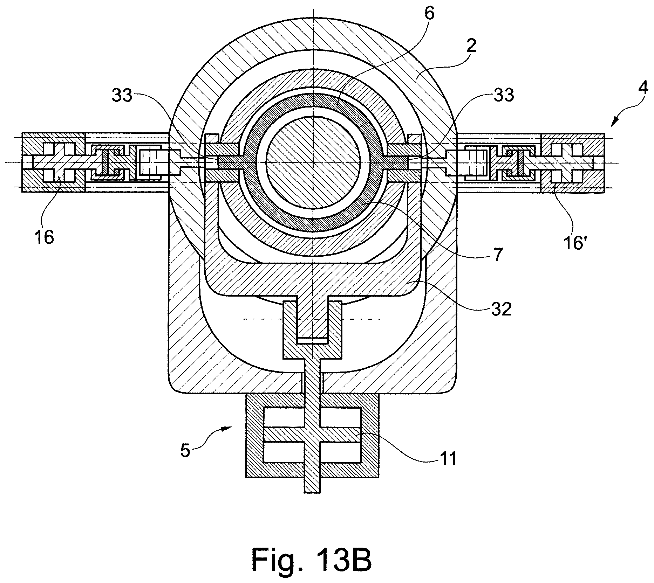

Bei einem in den Fig. 13A/13B dargestellten Ausführungsbeispiel sind der Funktionsabschnitt 9 des Aufnahmerings 6 und der radial bewegliche Düsenringabschnitt des Düsenrings 7 ebenfalls kinematisch gekoppelt. Die kinematische Kopplung erfolgt mittels einer Kulissenführung, die zwei in einen zugeordneten Führungsschlitz 28 eingreifende Mitnehmerelemente 29 aufweist. Die Mitnehmerelemente 29 sind quer zur Kraftwirkungsrichtung der auf den Aufnahmering 6 wirkenden zweiten Stelleinrichtung ausgerichtet und als Führungszapfen ausgebildet. Die zweite Stelleinrichtung 5 weist eine als Gabelkopf ausgebildete Anschlusseinrichtung 32 auf, die an die Kulissenführung 27 angeschlossen ist und die Stellbewegung der zweiten Stelleinrichtung 5 auf den Aufnahmering 6 überträgt. Der Gabelkopf ist mit einem Kraftantrieb 11 der zweiten Stelleinrichtung 5 gelenkig verbunden. Die Kraftwirkungsrichtung der zweiten Stelleinrichtung 5 ist radial auf den Funktionsabschnitt 9 des Aufnahmerings 6 ausgerichtet, wobei die Kraft an zwei gegenüberliegenden Kraftangriffspunkten 33 eingeleitet wird. Dadurch ist die lokal auf die Aufnahmehülse 6 wirkende Deformationskraft geringer und kann der Ringabschnitt, an dem die Kraft eingeleitet wird, mit einer geringeren Formstabilität ausgeführt werden.

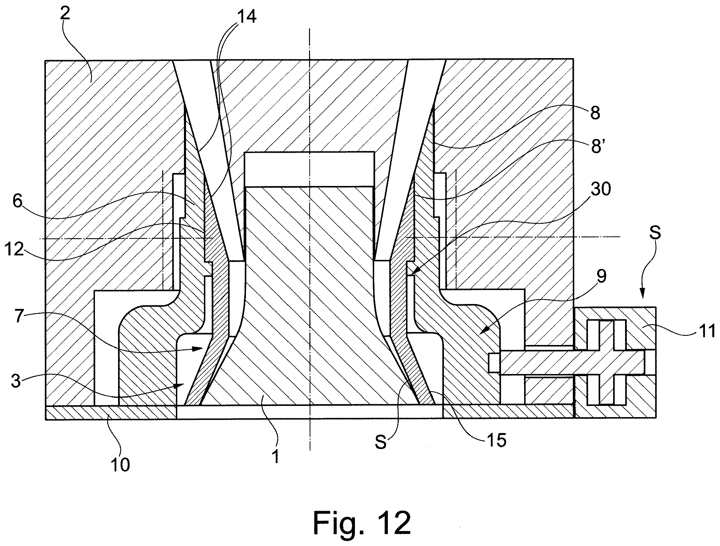

In dem in in Fig. 12 dargestellten Ausführungsbeispiel des erfindungsgemäßen Extrusionswerkzeuges erstreckt sich der Aufnahmering 6 bis zur Unterseite des Düseneinsatzes 3 und ist radial beweglich auf einem Träger abgestützt, der an der Unterseite des Düsenkörpers 2 angeordnet und beispielsweise als Tragring 10 ausgebildet ist Die auf den Aufnahmering 6 wirkende zweite Stelleinrichtung 5 und die auf den Düsenring 7 wirkende erste Stelleinrichtung 4 sind in etwa auf gleicher Höhe angeordnet. Der Düsenring 7 ist unterhalb seines Schiebesitzes 8' mittels einer lösbaren Formschlussverbindung 30, die radiale Relativbewegungen zulässt, an dem Aufnahmering 6 befestigt. Die Formschlussverbindung 30 kann insbesondere als Bajonett-Verbindung ausgebildet sein. Ein Vorteil dieser Abstützung ist, dass der Düsenring 7 mittels des Bajonett-Verschlusses schnell gewechselt werden kann.

In allen Ausführungsbeispielen sind die Kraftantriebe 16, 16' der ersten Stelleinrichtung 4 und der Kraftantrieb 11 der zweiten Stelleinrichtung 5 am Düsenkörper 2 abgestützt. Im Rahmen der Erfindung liegt es auch, dass die Stellbewegungen der ersten Stelleinrichtung 4 und der zweiten Stelleinrichtung 5 gekoppelt sind. Insbesondere kann eine Kopplung dergestalt vorgesehen sein, dass nur der Kraftantrieb/die Kraftantriebe einer der beiden Stelleinrichtungen 4, 5 am Düsenkörper abgestützt ist und der Kraftantrieb/die Kraftantriebe der anderen Stelleinrichtung von diesem mitbewegt und abgestützt wird.

Anhand der Ausführungsbeispiele sind Ausgestaltungen des erfindungsgemäßen Extrusionswerkzeuges dargestellt worden, um den radialen Düsenspaltverlauf am Düsenaustritt durch Verstellung eines mehrteiligen Düseneinsatzes zu beeinflussen. Die gezeigten Ausführungsmerkmale sind in beliebiger Weise kombinierbar.

### Liste der Bezugszeichen

- 1: Dorn
- 2: Düsenkörper
- 3: Düseneinsatz
- 4,5: Stelleinrichtungen
- 6: Aufnahmering
- 7: Düsenring
- 8, 8': Schiebesitz
- 9: Funktionsabschnitt
- 10: Tragring
- 11: Kraftantrieb
- 12: Kragen
- 13: formstabiles Mittelstück
- 14: Abschrägung
- 15: elastisch deformierbare Hülse
- 16, 16': Kraftantriebe
- 17: Kupplung
- 18, 18': Dichtungen
- 19, 19': Übertragungselement
- 20: Gegenlager
- 21, 21': Stellelemente
- 22, 22': Gewindeabschnitte
- 23, 23': Steuerflächen
- 24: Traverse
- 25: Anschlussbereich
- 26: Formschlusselemente
- 27: Kulissenführung
- 28: Führungsschlitz
- 29: Mitnehmerelement
- 30: Formschlussverbindung
- 31: Zwischenhülse
- 32: Anschlusseinrichtung
- 33: Kraftangriffspunkt
- s: Ringspalt
- x, y: Achsrichtungen

## Patentansprüche

1. Extrusionswerkzeug zur Erzeugung schlauchförmiger Vorformlinge mit einem Dorn (1), einem Düsenkörper (2), einem ringförmigen Düseneinsatz (3), der den Dorn (1) unter Bildung eines Ringspaltes (s) umgibt, und Stelleinrichtungen (4, 5), die radial auf den Düseneinsatz (3) wirken, wobei der Düseneinsatz (3) einen nach unten axial abgestützten Aufnahmering (6) sowie einen in den Aufnahmering (6) eingesetzten Düsenring (7) aufweist, 2 wobei der Aufnahmering mit einem Schiebesitz (8) innerhalb des Düsenkörpers (2) geführt ist und einen Funktionsabschnitt (9) aufweist, der unterhalb des Schiebesitzes (8) radial beweglich in einen Einbauraum des Düsenkörpers (2) vorsteht, wobei der Düsenring (7) mit einem Schiebesitz (8') in dem Aufnahmering (6) geführt sowie innerhalb oder außerhalb des Aufnahmerings (6) axial abgestützt ist und unterhalb seines Schiebesitzes (8'), mit dem er im Aufnahmering (6) geführt ist, einen radial beweglichen Düsenringabschnitt aufweist, wobei eine erste Stelleinrichtung (4) mit einer radialen Kraftwirkungsrichtung auf den Düsenring (7) wirkt, wobei eine zweite Stelleinrichtung (5) radial auf den Funktionsabschnitt (9) des Aufnahmerings (6) oder den Düsenring (7) wirkt, **dadurch gekennzeichnet, dass** der Aufnahmering (6) an seinem äußeren Umfang eine als Sitzfläche bearbeitete zylindrische Umfangsfläche aufweist, die in eine Zylinderbohrung des Düsenkörpers (2) oder in eine im Düsenkörper angeordnete Zwischenhülse (31) eingreift.

2. Extrusionswerkzeug nach Anspruch 1, **dadurch gekennzeichnet, dass** der Aufnahmering (6) radial beweglich auf einem Träger (10) abgestützt ist, der im Einbauraum des Düsenkörpers (2) befestigt ist.

3. Extrusionswerkzeug nach Anspruch 1 oder 2, **dadurch gekennzeichnet, dass** der Aufnahmering (6) sich zur Unterseite des Düseneinsatzes (3) erstreckt und radial beweglich auf dem Träger (10) abgestützt ist.

4. Extrusionswerkzeug nach einem der Ansprüche 1 bis 3, **dadurch gekennzeichnet, dass** die Zwischenhülse (31) mit einem Schiebesitz innerhalb des Düsenkörpers (2) gehalten ist.

5. Extrusionswerkzeug nach einem der Ansprüche 1 bis 4, **dadurch gekennzeichnet, dass** die zylindrische Umfangsfläche des Aufnahmerings (6) und die zugeordnete zylindrische Fläche der Zwischenhülse (31) oder der Zylinderbohrung des Düsenkörpers (2) eine Spielpassung bilden.

6. Extrusionswerkzeug nach einem der Ansprüche 1 bis 5, **dadurch gekennzeichnet, dass** der Aufnahmering (6) als Metallhülse ausgebildet ist.

7. Extrusionswerkzeug nach einem der Ansprüche 1 bis 6, **dadurch gekennzeichnet, dass** der Aufnahmering (6) zwischen dem Schiebesitz (8) und einem Kraftangriffspunkt der auf den Aufnahmering oder den Düsenring wirkenden zweiten Stelleinrichtung (5) mindestens einen ringförmigen Abschnitt aufweist, der unter der Wirkung einer von der zweiten Stelleinrichtung (5) erzeugten Radialkraft eine Krümmung des Aufnahmerings (6) bewirkt, wobei die Krümmung des Aufnahmerings (6) sich nach einer Entlastung der auf ihn wirkenden Radialkraft zumindest teilweise elastisch zurückstellt.

8. Extrusionswerkzeug nach einem der Ansprüche 1 bis 7, **dadurch gekennzeichnet, dass** die zweite Stelleinrichtung (5) zumindest einen Kraftantrieb (11) aufweist, der radiale Druckkräfte auf den Aufnahmering (6) oder den Düsenring (7) überträgt oder mittels einer Verbindung, die radiale Zug- und Druckkräfte überträgt, an den Aufnahmering (6) oder den Düsenring (7) angeschlossen ist.

9. Extrusionswerkzeug nach einem der Ansprüche 1 bis 8, **dadurch gekennzeichnet, dass** der Düsenring (7) an seinem oberen Ende einen Kragen (12) aufweist, der an seinem äußeren Umfang eine von dem Aufnahmering (6) umschlossene zylindrische Gleitsitzfläche aufweist, wobei die Gleitsitzfläche des Düsenrings (7) und die zugeordnete zylindrische Innenfläche des Aufnahmerings (6) eine Spielpassung bilden.

10. Extrusionswerkzeug nach einem der Ansprüche 1 bis 9, **dadurch gekennzeichnet, dass** der Düsenring (7) einen Kragen (12) aufweist, der auf einem Träger radial beweglich abgestützt ist.

11. Extrusionswerkzeug nach Anspruch 10, **dadurch gekennzeichnet, dass** der Kragen (12) des Düsenrings (7) und der den Kragen umgebende Abschnitt des Aufnahmerings (6) ein formstabiles Mittelstück (13) des Düseneinsatzes (3) bilden und dass die zweite Stelleinrichtung (5) zum Zwecke einer Kippverstellung des Düseneinsatzes (3) auf das formstabile Mittelstück (13) des Düseneinsatzes (3) wirkt.

12. Extrusionswerkzeug nach einem der Ansprüche 1 bis 9, **dadurch gekennzeichnet, dass** der Düsenring (7) unterhalb seines Schiebesitzes (8') an dem Aufnahmering (6) mittels einer lösbaren Formschlussverbindung (30), die radiale Relativbewegungen zulässt, an dem Aufnahmering (6) befestigt ist.

13. Extrusionswerkzeug nach Anspruch 12, **dadurch gekennzeichnet, dass** die Formschlussverbindung (30) als Bajonett-Verbindung ausgebildet ist.

14. Extrusionswerkzeug nach einem der Ansprüche 1 bis 13, **dadurch gekennzeichnet, dass** der Funktionsabschnitt (9) des Aufnahmerings (6) und der radial bewegliche Düsenringabschnitt des Düsenrings (7) kinematisch gekoppelt sind.

15. Extrusionswerkzeug nach Anspruch 14, **dadurch gekennzeichnet, dass** zur kinematischen Kopplung des Düsenrings (7) und des Aufnahmerings (6) eine Kulissenführung (27) vorgesehen ist, die mindestens ein in einen Führungsschlitz (28) eingreifendes Mitnehmerelement (29) aufweist, wobei das Mitnehmerelement quer zur Kraftwirkungsrichtung der zweiten Stelleinrichtung (5) ausgerichtet ist.

16. Extrusionswerkzeug nach Anspruch 14 oder 15, **dadurch gekennzeichnet, dass** der Führungsschlitz (28) am Aufnahmering (6) angeordnet ist und sich vertikal nach unten erstreckt und dass das Mitnehmerelement (29) mit einer radialen Ausrichtung mit dem Düsenring (7) verbunden ist.

17. Extrusionswerkzeug nach Anspruch 15 oder 16, **dadurch gekennzeichnet, dass** die zweite Stelleinrichtung (5) eine Anschlusseinrichtung (32) aufweist, die an die Kulissenführung (27) angeschlossen ist und eine Stellbewegung der zweiten Stelleinrichtung (5) auf den Aufnahmering (6) überträgt.

18. Extrusionswerkzeug nach Anspruch 17, **dadurch gekennzeichnet, dass** die Anschlusseinrichtung (32) als Gabelkopf ausgebildet ist, der mit einem Kraftantrieb (11) der zweiten Stelleinrichtung (5) gelenkig verbunden ist.

19. Extrusionswerkzeug nach einem der Ansprüche 1 bis 18, **dadurch gekennzeichnet, dass** die erste Stelleinrichtung (4) zumindest einen am Düsenkörper (2) befestigten Kraftantrieb (16, 16') aufweist, der unter Zwischenschaltung eines Gelenks oder einer Kupplung (17), die Ausgleichsbewegungen kompensiert, an den Düsenring (7) angeschlossen ist.

20. Extrusionswerkzeug nach einem der Ansprüche 1 bis 19, **dadurch gekennzeichnet, dass** der den Ringspalt am Düsenaustritt begrenzende Düsenringabschnitt des Düsenrings (7) als elastisch deformierbare Hülse (15) ausgebildet ist und dass die erste Stelleinrichtung (4) zumindest einen auf die elastisch deformierbare Hülse wirkenden Kraftantrieb aufweist.

21. Extrusionswerkzeug nach Anspruch 20, **dadurch gekennzeichnet, dass** die erste Stelleinrichtung (4) zwei Kraftantriebe (16, 16') aufweist, die unmittelbar oder unter Zwischenschaltung eines Übertragungselementes an Kraftangriffspunkten, die unter einem Winkel versetzt zueinander am Umfang des Düsenrings (7) angeordnet sind, radial auf die elastisch deformierbare Hülse (15) wirken.

22. Extrusionswerkzeug nach Anspruch 21, **dadurch gekennzeichnet, dass** die Kraftantriebe (16, 16') unmittelbar oder jeweils unter Zwischenschaltung eines Übertragungselementes derart mit der elastisch deformierbaren Hülse (15) verbunden sind, dass radiale Druckkräfte und radiale Zugkräfte auf die Hülse (15) übertragen werden können, und dass die Kraftantriebe (16, 16') an eine Programmsteuerung für ihre Stellbewegungen angeschlossen sind.

23. Extrusionswerkzeug nach Anspruch 22, **dadurch gekennzeichnet, dass** die elastisch deformierbare Hülse (15) an mehreren an ihrem Umfang angeordneten Gegenlagern (20) abgestützt ist und dass mindestens ein Kraftantrieb (16) vorgesehen ist, der unmittelbar oder unter Zwischenschaltung eines Übertragungselementes (19) auf eine außenliegende Mantelfläche der Hülse (15) drückt.

24. Extrusionswerkzeug nach Anspruch 23, **dadurch gekennzeichnet, dass** der Kraftantrieb (16) an Übertragungselemente (19, 19') angeschlossen ist, die paarweise auf die elastisch deformierbare Hülse (15) wirken.

25. Extrusionswerkzeug nach einem der Ansprüche 1 bis 18, **dadurch gekennzeichnet, dass** der den Ringspalt am Düsenaustritt begrenzende Düsenringabschnitt des Düsenrings (7) formstabil ausgebildet ist und dass die erste Stelleinrichtung (4) zumindest einen auf den formstabilen Düsenringabschnitt wirkenden Kraftantrieb aufweist.

26. Extrusionswerkzeug nach Anspruch 25, **dadurch gekennzeichnet, dass** die zweite Stelleinrichtung (5) auf den Düsenring (7) wirkt und zumindest einen auf den formstabilen Düsenringabschnitt wirkenden Kraftantrieb (11) aufweist.

27. Extrusionswerkzeug nach Anspruch 25 oder 26, **dadurch gekennzeichnet, dass** die erste Stelleinrichtung (4) und die zweite Stelleinrichtung (5) jeweils zumindest einen Kraftantrieb (16, 11) aufweisen, der unter Zwischenschaltung eines Gelenks oder einer Kupplung, die Ausgleichsbewegungen kompensiert, an den Düsenring (7) angeschlossen ist.

28. Extrusionswerkzeug nach einem der Ansprüche 1 bis 27, **dadurch gekennzeichnet, dass** zwischen dem Düsenkörper (2) und dem Aufnahmering (6) eine Dichtung (18) vorgesehen ist, die im Bereich des Schiebesitzes angeordnet ist.

29. Extrusionswerkzeug nach einem der Ansprüche 1 bis 28, **dadurch gekennzeichnet, dass** zwischen dem Aufnahmering (6) und dem Düsenring (7) eine Dichtung (18') vorgesehen ist, die im Bereich des Schiebesitzes angeordnet ist.

## Claims

1. An extrusion tool for producing tubular preforms, comprising a mandrel (1), a nozzle body (2), an annular nozzle insert (3) surrounding the mandrel (1) thereby forming an annular gap (s), and positioners (4, 5) acting radially on the nozzle insert (3), wherein the nozzle insert (3) has a holding ring (6) supported axially from below and has a nozzle ring (7) inserted into the holding ring (6), wherein the holding ring is guided within the nozzle body (2) by a slide seat (8) and has a functional portion (9) that is radially movable and projects into an installation space of the nozzle body (2) below the slide seat (8), wherein the nozzle ring (7) is guided in the holding ring (6) by means of a slide seat (8') and is axially supported inside and outside of the holding ring (6) and has a radially movable nozzle ring section below its slide seat (8'), by which slide seat it is guided in the holding ring (6), wherein a first positioner (4) acts on the nozzle ring (7) with a first radial force application direction, wherein a second positioner (5) acts radially on the functional portion (9) of the holding ring (6) or on the nozzle ring (7), **characterized in that** the holding ring (6) has on its outer periphery a cylindrical peripheral surface machined as a seating surface which engages in a cylindrical hole of the nozzle body (2) or in an intermediate sleeve (31) arranged in the nozzle body.

2. The extrusion tool according to claim 1, **characterized in that** the holding ring (6) is radially movably supported on a support (10) that is secured in the installation space of the nozzle body (2).

3. The extrusion tool according to claim 1 or 2, **characterized in that** the holding ring (6) extends towards the lower side of the nozzle insert (3) and is radially movably supported on the support (10).

4. The extrusion tool according to any one of claims 1 to 3, **characterized in** the intermediate sleeve (31) is held inside the nozzle body (2) by means of a slide seat.

5. The extrusion tool according to any one of claims 1 to 4, **characterized in that** the cylindrical peripheral surface of the holding ring (6) and the associated cylindrical surface of the intermediate sleeve (31) or the cylindrical hole of the nozzle body (2) form a clearance fit.

6. The extrusion tool according to any one of claims 1 to 5, **characterized in that** the holding ring (6) is formed as a metal sleeve.

7. The extrusion tool according to any one of claims 1 to 6, **characterized in that** the holding ring (6) has at least one annular section between the slide seat (8) and a force application point of the second positioner (5) acting on the holding ring or the nozzle ring, which annular section effects a bending of the holding ring (6) caused by the effect of a radial force generated by the second positioner (5), wherein the bending of the holding ring (6) resets elastically, at least partially, after the radial force acting thereon is released.

8. The extrusion tool according to any one of claims 1 to 7, **characterized in that** the second positioner (5) has at least one actuator (11) that transmits radial pushing forces to the holding ring (6) or the nozzle ring (7), or that is connected to the holding ring (6) or the nozzle ring (7) by means of a connection that transmits radial pulling and pushing forces.

9. The extrusion tool according to any one of claims 1 to 8, **characterized in that** the nozzle ring (7) on its upper end has a collar (12) that has on its outer periphery a cylindrical sliding fit surface enclosed by the holding ring (6), wherein the sliding fit surface of the nozzle ring (7) and the associated cylindrical inner surface of the holding ring (6) form a clearance fit.

10. The extrusion tool according to any one of claims 1 to 9, **characterized in that** the nozzle ring (7) has a collar (12) that is supported on a support in a radially movable manner.

11. The extrusion tool according to claim 10, **characterized in that** the collar (12) of the nozzle ring (7) and the section of the holding ring (6) surrounding the collar form a dimensionally stable middle piece (13) of the nozzle insert (3) and that the second positioner (5) acts on the dimensionally stable middle piece (13) of the nozzle insert (3) for the purpose of a tilting displacement of the nozzle insert (3).

12. The extrusion tool according to any of claims 1 to 9, **characterized in that** the nozzle ring (7), below its slide seat (8'), at the holding ring (6), is fastened to the holding ring (6) by means of a detachable positive-locking connection (30) that permits radial relative movements.

13. The extrusion tool according to claim 12, **characterized in that** the positive-locking connection (30) is formed as a bayonet joint.

14. The extrusion tool according to any one of claims 1 to 13, **characterized in that** the functional portion (9) of the holding ring (6) and the radially movable nozzle ring section of the nozzle ring (7) are kinematically coupled.

15. The extrusion tool according to claim 14, **characterized in that** for kinematically coupling the nozzle ring (7) and the holding ring (6), a slotted guide (27) is provided that has at least one radial driver element (29) engaging in a guide slot (28), wherein the driver element is oriented transverse to the force application direction of the second positioner (5).

16. The extrusion tool according to claim 14 or 15, **characterized in that** the guide slot (28) is arranged on the holding ring (6) and extends vertically downwards, and that the driver element (29) is connected to the nozzle ring (7) and has a radial orientation.

17. The extrusion tool according to claim 15 or 16, **characterized in that** the second positioner (5) has a connector device (32) that connects with the slotted guide (27) and transmits an adjustment movement of the second positioner (5) to the holding ring (6).

18. The extrusion tool according to claim 17, **characterized in that** the connector device (32) is formed as a fork head that is connected to an actuator (11) of the second positioner (5) in an articulated manner.

19. The extrusion tool according to any one of claims 1 to 18, **characterized in that** the first positioner (4) has at least one actuator (16, 16') that is fastened to the nozzle body (2) and is connected to the nozzle ring (7) via an interposed joint or coupling (17) for compensating equalizing movements.

20. The extrusion tool according to any one of claims 1 to 19, **characterized in that** the nozzle ring section of the nozzle ring (7) bordering the annular gap at the nozzle outlet is formed as an elastically deformable sleeve (15) and that the first positioner (4) has at least one actuator that acts on the elastically deformable sleeve.

21. The extrusion tool according to claim 20, **characterized in that** the first positioner (4) has two actuators (16, 16') that act, either directly or via an interposed transmission element, radially on the elastically deformable sleeve (15) at force application points arranged angularly offset from one another at the periphery of the nozzle ring (7).

22. The extrusion tool according to claim 21, **characterized in that** the actuators (16, 16') are connected to the elastically deformable sleeve (15), either directly or in each case via an interposed transmission element, in such a manner that radial pushing forces and radial pulling forces can be transmitted to the sleeve (15), and that the actuators (16, 16') are connected to a programmable controller for controlling the adjusting movement thereof.

23. The extrusion tool according to claim 22, **characterized in that** the elastically deformable sleeve (15) is supported on a plurality of counter-bearings (20) arranged thereon, and that at least one actuator (16) is provided that pushes on an outer shell surface of the sleeve (15) either directly or via an interposed transmission element (19).

24. The extrusion tool according to claim 23, **characterized in that** the actuator (16) is connected to transmission elements (19, 19') that act on the elastically deformable sleeve (15) in pairs.

25. The extrusion tool according to any one of claims 1 to 18, **characterized in that** the nozzle ring section of the nozzle ring (7) bordering the annular gap at the nozzle outlet is formed in a dimensionally stable manner, and that the first positioner (4) has at least one actuator that acts on the dimensionally stable nozzle ring section.

26. The extrusion tool according to claim 25, **characterized in that** the second positioner (5) acts on the nozzle ring (7) and has at least one actuator (11) that acts on the dimensionally stable nozzle ring section.

27. The extrusion tool according to claim 25 or 26, **characterized in that** the first positioner (4) and the second positioner (5) each have at least one actuator (16, 11) that is connected to the nozzle ring (7) via an interposed joint or coupling that compensates equalizing movements.

28. The extrusion tool according to any one of claims 1 to 27, **characterized in that** a seal (18) is provided between the nozzle body (2) and the holding ring (6), which seal is arranged in the region of the slide seat.

29. The extrusion tool according to any one of claims 1 to 28, **characterized in that** a seal (18') is provided between the holding ring (6) and the nozzle ring (7), which seal is arranged in the region of the slide seat.

## Revendications

1. Outil d'extrusion pour la fabrication d'ébauches de forme tubulaire, comportant un mandrin (1), un corps de buse (2), une garniture de buse de forme annulaire (3) qui entoure le mandrin (1) en formant un intervalle annulaire (s) et des dispositifs de réglage (4, 5) qui agissent radialement sur la garniture de buse (3), la garniture de buse (3) présentant un anneau récepteur s'appuyant axialement vers le bas (6) ainsi qu'un anneau de buse (7) inséré dans l'anneau récepteur (6), l'anneau récepteur étant guidé par un siège coulissant (8) dans le corps de buse (2) et présentant une section fonctionnelle (9) qui est proéminente en-dessous du siège coulissant (8) de manière mobile radialement dans un espace de montage du corps de buse (2) l'anneau de buse (7) étant guidé par un siège coulissant (8') dans l'anneau récepteur (6) et s'appuyant axialement à l'intérieur ou à l'extérieur de l'anneau récepteur (6) et présentant, en-dessous de son siège coulissant (8') par lequel il est guidé dans l'anneau récepteur (6), une section d'anneau de buse mobile radialement, un premier dispositif de réglage (4) agissant avec un sens radial d'action de force sur l'anneau de buse (7), un second dispositif de réglage (5) agissant radialement sur la section fonctionnelle (9) de l'anneau récepteur (6) ou de l'anneau de buse (7), **caractérisé en ce que** l'anneau récepteur (6) présente sur sa circonférence extérieure une surface circonférentielle cylindrique façonnée sous forme de surface d'assise qui s'engrène dans un trou cylindrique du corps de buse (2) ou dans un manchon intermédiaire (31) disposé dans le corps de buse.

2. Outil d'extrusion selon la revendication 1, **caractérisé en ce que** l'anneau récepteur (6) s'appuie de manière mobile radialement sur un support (10) qui est fixé dans l'espace de montage du corps de buse (2).

3. Outil d'extrusion selon la revendication 1 ou 2, **caractérisé en ce que** l'anneau récepteur (6) s'étend vers la face intérieure de la garniture de buse (3) et s'appuie sur le support (10) de manière mobile radialement.

4. Outil d'extrusion selon une des revendications 1 à 3, **caractérisé en ce que** le manchon intermédiaire (31) est maintenu par un siège coulissant à l'intérieur du corps de buse (2).

5. Outil d'extrusion selon une des revendications 1 à 4, **caractérisé en ce que** la surface circonférentielle cylindrique de l'anneau récepteur (6) et la surface cylindrique associée du manchon intermédiaire (31) ou le trou cylindrique du corps de buse (2) forment un ajustement à jeu.

6. Outil d'extrusion selon une des revendications 1 à 5, **caractérisé en ce que** l'anneau récepteur (6) est réalisé sous forme d'un manchon métallique.

7. Outil d'extrusion selon une des revendications 1 à 6, **caractérisé en ce que** l'anneau récepteur (6) présente, entre le siège coulissant (8) et un point de prise de force du second dispositif de réglage (5) agissant sur l'anneau de buse, au moins une section de forme annulaire qui, sous l'effet d'une force radiale générée par le second dispositif de réglage (5), entraîne une courbure de l'anneau récepteur (6), la courbure de l'anneau récepteur (6) étant du moins en partie remise à zéro élastiquement après un délestage de la force radiale agissant sur celui-ci.

8. Outil d'extrusion selon une des revendications 1 à 7, **caractérisé en ce que** le second dispositif de réglage (5) présente au moins une propulsion mécanique (11) qui transfère les forces radiales de compression sur l'anneau récepteur (6) ou l'anneau de buse (7) ou est raccordé, au moyen d'une connexion qui transfère les forces radiales de traction et de compression à l' anneau récepteur (6) ou à l' anneau de buse (7).

9. Outil d'extrusion selon une des revendications 1 à 8, **caractérisé en ce que** l'anneau de buse (7) présente à son extrémité supérieure une collerette (12) qui présente sur sa circonférence extérieure une surface d'assise de glissement cylindrique entourée par l'anneau récepteur (6), la surface d'assise de glissement de l'anneau de buse (7) et la surface intérieure cylindrique associée de l'anneau récepteur (6) formant un ajustement à jeu.

10. Outil d'extrusion selon une des revendications 1 à 9, **caractérisé en ce que** l'anneau de buse (7) présente une collerette (12) qui s'appuie de manière mobile radialement sur un support.

11. Outil d'extrusion selon la revendication 10, **caractérisé en ce que** la collerette (12) de l'anneau de buse (7) et la section entourant la collerette de l'anneau récepteur (6) constituent une pièce centrale de forme stable (13) de la garniture de buse (3) et que le second dispositif de réglage (5), aux fins d'un réglage basculant de la garniture de buse (3), agit sur la pièce centrale de forme stable (13) de la garniture de buse (3).

12. Outil d'extrusion selon une des revendications 1 à 9, **caractérisé en ce que** l'anneau de buse (7) est fixé en-dessous de son siège coulissant (8') à l'anneau récepteur (6), au moyen d'une connexion à correspondance géométrique dissociable (30) qui permet des mouvements radiaux relatifs, à l'anneau récepteur (6).

13. Outil d'extrusion selon la revendication 12, **caractérisé en ce que** la connexion à correspondance géométrique (30) est réalisée après sous forme d'une connexion à baïonnette.

14. Outil d'extrusion selon une des revendications 1 à 13, **caractérisé en ce que** la section fonctionnelle (9) de l'anneau récepteur (6) et la section d'anneau de buse mobile radialement de l'anneau de buse (7) sont couplées au niveau cinématique.

15. Outil d'extrusion selon la revendication 14, **caractérisé en ce que**, pour le couplage cinématique de l'anneau de buse (7) et de l'anneau récepteur (6), il est prévu un guide à glissière (27) qui présente au moins un élément entraîneur (29) s'engrenant dans une fente de guidage (28), l'élément entraîneur étant orienté transversalement au sens d'effet de force du second dispositif de réglage (5).

16. Outil d'extrusion selon la revendication 14 ou 15, **caractérisé en ce que** la fente de guidage (28) est pratiquée au niveau de l'anneau récepteur (6) et s'étend verticalement vers le bas et que l'élément entraîneur (29) est raccordé avec une orientation radiale à l'anneau de buse (7).

17. Outil d'extrusion selon la revendication 15 ou 16, **caractérisé en ce que** le second dispositif de réglage (5) présente un dispositif de raccordement (32) qui est raccordé au guide à glissière (27) et transfère un mouvement de réglage du second dispositif de réglage (5) à l'anneau récepteur (6).

18. Outil d'extrusion selon la revendication 17, **caractérisé en ce que** le dispositif de raccordement (32) est réalisé sous forme d'une tête de fourche qui est reliée de manière articulée à une propulsion mécanique (11) du second dispositif de réglage (5).

19. Outil d'extrusion selon une des revendications 1 à 18, **caractérisé en ce que** le premier dispositif de réglage (4) présente au moins une propulsion mécanique (16, 16') fixée au corps de buse (2) et qui, par l'intermédiaire d'une articulation ou d'un accouplement (17), compense les mouvements d'équilibrage et auquel l'anneau de buse (7) est raccordé.

20. Outil d'extrusion selon une des revendications 1 à 19, **caractérisé en ce que** la section d'anneau de buse limitant la fente annulaire à la sortie de la buse de l'anneau de buse (7) est réalisée sous forme d'un manchon élastiquement déformable (15) et que le premier dispositif de réglage (4) présente au moins une propulsion mécanique agissant sur le manchon élastiquement déformable.

21. Outil d'extrusion selon la revendication 20, **caractérisé en ce que** le premier dispositif de réglage (4) présente deux propulsions mécaniques (16, 16') qui sont disposées directement ou par l'intermédiaire d'un élément de transmission à des points de prise de force qui sont disposés décalés les uns des autres suivant un angle sur la circonférence de l'anneau de buse (7) et agissent radialement sur le manchon élastiquement déformable (15).

22. Outil d'extrusion selon la revendication 21, **caractérisé en ce que** les propulsions mécaniques (16, 16') sont raccordées directement ou le respectivement par l'intermédiaire d'un élément de transfert au manchon élastiquement déformable (15) de manière à ce que des forces radiales de compression et des forces radiales de traction puissent être transférées sur le manchon (15) et que les propulsions mécaniques (16, 16') sont raccordées à une commande de programme pour leurs mouvements de réglage.

23. Outil d'extrusion selon la revendication 22, **caractérisé en ce que** le manchon élastiquement déformable (15) s'appuie sur plusieurs contre-paliers (20) disposés sur sa circonférence et qu'il est prévu au moins une propulsion mécanique (16) qui appuie directement ou par l'intermédiaire d'un élément de transfert (19) sur une surface d'enveloppe extérieure du manchon (15).

24. Outil d'extrusion selon la revendication 23, **caractérisé en ce que** la propulsion mécanique (16) est raccordée à des éléments de transfert (19, 19') qui agissent par paire sur le manchon élastiquement déformable (15).

25. Outil d'extrusion selon une des revendications 1 à 18, **caractérisé en ce que** la section d'anneau de buse limitant l'intervalle annulaire à la sortie de buse de l'anneau de buse (7) est réalisée avec une forme stable et que le premier dispositif de réglage (4) présente au moins une propulsion mécanique agissant sur la section à forme stable de l'anneau de buse.

26. Outil d'extrusion selon la revendication 25, **caractérisé en ce que** le second dispositif de réglage (5) agit sur l'anneau de buse (7) et présente au moins une propulsion mécanique (11) agissant sur la section de forme stable de l'anneau de buse.

27. Outil d'extrusion selon la revendication 25 ou 26, **caractérisé en ce que** le premier dispositif de réglage (4) et le second dispositif de réglage (5) présentent respectivement au moins une propulsion mécanique (16, 11) qui est raccordée, par l'intermédiaire d'une articulation ou d'un accouplement qui compense les mouvements d'équilibrage, à l'anneau de buse (7).

28. Outil d'extrusion selon une des revendications 1 à 27, **caractérisé en ce que**, entre le corps de buse (2) et l'anneau récepteur (6), il est prévu un joint (18) qui est disposé au niveau du siège coulissant.

29. Outil d'extrusion selon une des revendications 1 à 28, **caractérisé en ce que**, entre l'anneau récepteur (6) et l'anneau de buse (7), il est prévu un joint (18') qui est disposé au niveau du siège coulissant.
